# EUROPEAN PATENT SPECIFICATION

(11) **EP 3 975 060 B1**
(45) Date of publication and mention of the grant of the patent: **25.11.2026**
(21) Application number: 20199106.4
(22) Date of filing: 29.09.2020
(51) Int. Cl.: G06N 3/063, G06N 3/04, G06N 3/08

(54) **METHOD AND APPARATUS FOR ANALYSING NEURAL NETWORK PERFORMANCE**
VERFAHREN UND VORRICHTUNG ZUR ANALYSE DER LEISTUNG EINES NEURONALEN NETZES
PROCÉDÉ ET APPAREIL D'ANALYSE DE PERFORMANCE DE RÉSEAU NEURONAL

(43) Date of publication of application: 30.03.2022
(73) Proprietor: Samsung Electronics Co., Ltd., Gyeonggi-do 16677 (KR)
(72) Inventor: Chau, Chun Pong, Cambridge, CB1 2JH (GB); Abdelfattah, Mohamed S, Cambridge, CB1 2JH (GB); Dudziak, Lukasz, Cambridge, CB1 2JH (GB); Lee, Royson, Cambridge, CB1 2JH (GB); Kim, Hyeji, Cambridge, CB1 2JH (GB); Lane, Nicholas Donald Atkins, Cambridge, CB1 2JH (GB)
(74) Representative: Appleyard Lees IP LLP

(56) References cited:
- CN-A- 111 126 668
- QISHI WU ET AL: "A distributed workflow management system with case study of real-life scientific applications", PERFORMANCE COMPUTING AND COMMUNICATIONS CONFERENCE (IPCCC), 2011 IEEE 30TH INTERNATIONAL, IEEE, 17 November 2011 (2011-11-17), pages 1 - 8, XP032077177, ISBN: 978-1-4673-0010-0, DOI: 10.1109/PCCC.2011.6108109
- QISHI WU ET AL: "A Distributed Workflow Management System with Case Study of Real-life Scientific Applications on Grids", JOURNAL OF GRID COMPUTING, KLUWER ACADEMIC PUBLISHERS, DO, vol. 10, no. 3, 16 August 2012 (2012-08-16), pages 367 - 393, XP035109732, ISSN: 1572-9184, DOI: 10.1007/S10723-012-9222-7
- MICHAEL J KLAIBER ET AL: "An End-to-End HW/SW Co-Design Methodology to Design Efficient Deep Neural Network Systems using Virtual Models", ARXIV.ORG, CORNELL UNIVERSITY LIBRARY, 201 OLIN LIBRARY CORNELL UNIVERSITY ITHACA, NY 14853, 25 October 2019 (2019-10-25), XP081520919
- LUKASZ DUDZIAK ET AL: "BRP-NAS: Prediction-based NAS using GCNs", ARXIV.ORG, CORNELL UNIVERSITY LIBRARY, 201 OLIN LIBRARY CORNELL UNIVERSITY ITHACA, NY 14853, 11 August 2020 (2020-08-11), XP081736852
- CHEN WEI ET AL: "NPENAS: Neural Predictor Guided Evolution for Neural Architecture Search", ARXIV.ORG, CORNELL UNIVERSITY LIBRARY, 201 OLIN LIBRARY CORNELL UNIVERSITY ITHACA, NY 14853, 10 September 2020 (2020-09-10), XP081759315
- ZHANG KUO ET AL: "A Comparison of Distributed Machine Learning Platforms", 2017 26TH INTERNATIONAL CONFERENCE ON COMPUTER COMMUNICATION AND NETWORKS (ICCCN), IEEE, 31 July 2017 (2017-07-31), pages 1 - 9, XP033154032, DOI: 10.1109/ICCCN.2017.8038464

## Description

### Field

The present application generally relates to a method for analysing neural network performance using the structure of the neural network and the details of the hardware specification.

### Background

Real-world deployment of neural networks on devices or in network-connected environment imposes efficiency and resource constraints. Neural architecture search (NAS) can automatically design competitive neural networks compared to hand-designed alternatives. An example on NAS is described in "Efficient architecture search by network transformation" by Cai et al published in Association for the Advancement of Artificial Intelligence in 2018. However, as described for example in "Neural architecture search with reinforcement learning" by Zoph et al in International Conference on Learning Representations (ICLR) in 2017, NAS may be computationally expensive when training models. Non-trivial complexity may also be introduced into the search process, e.g. as described in "Efficient neural architecture search via parameter sharing" by Pham et al published in International Conference on Machine Learning in 2018. Additionally, real-world deployment demands that the neural network model meets both efficiency or hardware constraints as well as being accurate. The performance metrics which may be required may include accuracy, latency, energy and memory consumption. The process is time consuming, possibly even impractically slow and computationally expensive.

On the other hand, designing and prototyping new hardware to run evolving neural networks requires fast and accurate performance evaluation. Existing performance predictors are typically not accurate enough to capture the complexities of models running on varieties of hardware.

The present applicant has recognised the need for an improved way of predicting the performance of a neural network on a particular hardware configuration.

Related background art is further disclosed in KLAIBER ET AL: "An End-to-End HW/SW Co-Design Methodology to Design Efficient Deep Neural Network Systems using Virtual Models", ARXIV.ORG, CORNELL UNIVERSITY LIBRARY, 201 OLIN LIBRARY CORNELL UNIVERSITY ITHACA, NY 14853, 25 October 2019 (2019-10-25). In this document, the performance of a compiled neural network is simulated on a virtual hardware. The virtual hardware comprises interconnected components such as CPU, memory. The performance evaluation is thus based on simulation.

Statistical methods to estimate performance in the context of executing computational workflows represented by directed acyclic graphs (DAG) on distributed computing architectures are mentioned in QISHI WU ET AL: "A distributed workflow management system with case study of real-life scientific applications", PERFORMANCE COMPUTING AND COMMUNICATIONS CONFERENCE (IPCCC), 2011 IEEE 30TH INTERNATIONAL, IEEE, 17 November 2011 (2011-11-17), pages 1-8, DOI: 10.1109/PCCC.2011.6108109, ISBN: 978-1-4673-0010-0 and QISHI WU ET AL: "A Distributed Workflow Management System with Case Study of Real-life Scientific Applications on Grids", JOURNAL OF GRID COMPUTING, KLUWER ACADEMIC PUBLISHERS, DO, vol. 10, no. 3, 16 August 2012 (2012-08-16), pages 367-393, ISSN: 1572-9184, DOI: 10.1007/S10723-012-9222-7.

Comparing the performance of neural architectures using a graph convolution neural network is disclosed in DUDZIAK ET AL: "BRP-NAS: Prediction-based NAS using GCNs", ARXIV.ORG, CORNELL UNIVERSITY LIBRARY, 201 OLIN LIBRARY CORNELL UNIVERSITY ITHACA, NY 14853, 11 August 2020 (2020-08-11).

CHEN WEI ET AL: "NPENAS: Neural Predictor Guided Evolution for Neural Architecture Search", ARXIV.ORG, CORNELL UNIVERSITY LIBRARY, 201 OLIN LIBRARY CORNELL UNIVERSITY ITHACA, NY 14853, 10 September 2020 (2020-09-10) discloses an evolutionary NAS with performance predictors, ranking predictor, etc..

CN 111 126 668 A (NAT UNIV DEFENSE TECHNOLOGY PLA) 8 May 2020 (2020-05-08) deals with an operating time performance predictor for big data workflows by using a graph convolution neural network.

ZHANG KUO ET AL: "A Comparison of Distributed Machine Learning Platforms", 2017 26TH INTERNATIONAL CONFERENCE ON COMPUTER COMMUNICATION AND NETWORKS (ICCCN), IEEE, 31 July 2017 (2017-07-31), pages 1-9, DOI: 10.1109/ICCCN.2017.8038464 is background art that shows the fact that neural network models are executed on distributed big data platforms.

### Summary

The invention and the particular embodiments for which protection is sought are defined by the appended claims.

In a first approach of the present techniques, there is provided a computer implemented method using a trained predictor for predicting performance of a neural network on a hardware arrangement, the method comprising: obtaining a hardware arrangement comprising a plurality of interconnected components or devices and a neural network model which is to be implemented on the hardware arrangement; obtaining a graphical model for representing hardware arrangements, wherein the graphical model comprises a plurality of connected nodes; extracting, using a feature extractor of the trained predictor, a graphical representation of the hardware arrangement using the graphical model, wherein each of the interconnected components or devices is represented by one of the plurality of connected nodes; predicting, using the trained predictor, performance of the neural network model on the hardware arrangement using the extracted graphical representation of the hardware arrangement; and outputting the predicted performance.

In a second approach of the present techniques, there is provided a server comprising a trained predictor for carrying out the method of predicting performance of a neural network on a hardware arrangement.

Preferred features are set out in the appended dependent claims and outlined below, and these apply equally to all approaches of the present techniques.

The hardware arrangement may be selected from a single-chip device comprising a plurality of interconnected components (including but not limited to memory, processor, buffer and pool) and a system comprising a plurality of interconnected devices. The system may be a system-on-chip comprising a plurality of interconnected devices or a system comprising a plurality of network connected devices.

The neural network model may be a deep neural network. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks. For example, a CNN may be composed of different computational blocks or operations selected from conv1x1, conv3x3 and pool3x3.

Obtaining the hardware arrangement and the neural network model may comprise first obtaining the hardware arrangement and then obtaining the neural network model or vice versa. Obtaining the hardware arrangement and/or the neural network model may comprise obtaining details of the hardware arrangement and/or the neural network model. The details of the hardware arrangement may comprise the features of the components and/or devices within the hardware arrangement. The details of the neural network model may comprise the details of the operations.

Extracting a graphical representation of the first hardware arrangement may comprise extracting a feature vector for each node of the plurality of connected nodes in the graphical model. For example, when the hardware arrangement is a single-chip device, the feature vector may comprise component type and bandwidth. When the hardware arrangement is a system, the feature vector may comprise multiple features selected from processor type, device type, clock frequency, memory size and bandwidth.

The feature extractor may be a graph convolutional network having k layers and may extract the graphical representation using a layer wise propagation rule: ${V}^{n + 1} = g \left({V}^{n}, A\right) = σ \left({AV}^{n}{W}^{n}\right)$ where A is an adjacency matrix, Vⁿ and Wⁿ are the feature matrix and weight matrix at the *n-th* layer respectively, g is the propagation function, e.g. graph convolution and σ() is a non-linear activation function. The method may comprise an optional step of initialising the weights.

Predicting performance of the neural network model on the first hardware arrangement may comprise at least one of: predicting individual performances of each interconnected component or device within the hardware arrangement; and predicting overall performance of the first hardware arrangement. For example, the graphical model may comprise a global node and predicting the overall performance of the first hardware arrangement may use the global node. The global node may be described as a node that connects to all the other models and may be used to aggregate all node-level information within the graphical model.

The trained predictor may comprise a fully connected layer which may comprise one layer or a plurality of layers. The performance may be predicted by inputting the or each feature vector(s) to the fully connected layer.

Different performance metrics may be output as desired and may include one or more of accuracy, latency, energy consumption, thermals and memory utilization. The same or different performance metrics may be output for the individual performance of the interconnected components or device and the overall performance.

Obtaining a hardware arrangement may comprise generating a plurality of designs (manually or automatically) and selecting the hardware arrangement. It will be appreciated that the method of predicting performance may be used to search through the plurality of designs to select a hardware arrangement which is optimised for a particular neural network. Thus, according to another approach of the present techniques, there is provided a computer implemented method for designing a hardware arrangement for implementing a neural network model, the method comprising obtaining a plurality of hardware arrangements; predicting the performance of the neural network model on each hardware arrangement in the plurality of hardware arrangements using the methods described above; comparing the predicted performances for each hardware arrangement and selecting the hardware arrangement having a preferred predicted performance. For example, the preferred predicted performance may be the arrangement with the highest accuracy and/or the lowest latency.

The trained predictor may comprise at least a first feature extractor and a second feature extractor. There may be a plurality of feature extractors. Each feature extractor may extract a separate feature vector and the feature vectors may be combined to give a multivalued vector which may be used to predict performance. When the inputs to the feature extractors are the same, e.g. both hardware arrangements or both paired hardware and neural network models, the extractors may use shared weights, i.e. the same weights. By using the same weights, the feature extraction may be termed symmetric and thus input i1 and i2 will generate the same output as input i2 and i1. The use of shared weights may be particularly important when using a binary predictor in which performance scores are compared.

In a first example, the first feature extractor may extract a graphical representation of the hardware arrangement and the second feature extractor may extract a graphical representation of the neural network model. In this arrangement, the method may also comprise obtaining a graphical model comprising a plurality of connected nodes for representing neural network models and extracting using the second feature extractor of the trained predictor, a graphical representation of the neural network model using the graphical model, wherein each of operation of the neural network model is represented by one of the plurality of connected nodes.

In this arrangement, predicting performance of the neural network model on the hardware arrangement may use both the extracted graphical representations of the hardware arrangement and the neural network model. Predicting performance of the neural network model on the hardware arrangement may comprise predicting individual performances of each operation of the neural network model. This may be in addition or instead of predicting the performance of the individual components/device and overall performance described above.

Obtaining a neural network model may comprise generating a plurality of designs (manually or automatically) and selecting the neural network model. It will be appreciated that the method of predicting performance may be used to search through the plurality of designs of both hardware arrangement and neural network models to select a hardware arrangement which is optimised for a particular neural network. Thus, according to another approach of the present techniques, there is provided a computer implemented method for designing a hardware arrangement for implementing a neural network model, the method comprising obtaining a plurality of hardware arrangements; predicting the performance of the neural network model on each hardware arrangement in the plurality of hardware arrangements using the method described above; comparing the predicted performances for each hardware arrangement and selecting the hardware arrangement having a preferred predicted performance.

In another example, the first feature extractor may extract a graphical representation of the hardware arrangement and the second feature extractor may extract a graphical representation of a second, different hardware arrangement. When each feature extractor receives the same type of input (e.g. hardware arrangement only, neural network model only or paired combination), it may not be necessary to obtain an absolute value for the performance of a neural network model on a particular hardware arrangement but it may be sufficient to compare the performances. For example, if each feature extractor receives a different hardware arrangement, the method may comprise comparing the performances of the neural network model on the different hardware arrangements to determine which hardware arrangement is best, e.g. most accurate or has the lowest latency.

The method may further comprise obtaining a second hardware arrangement comprising a plurality of interconnected components or devices; extracting, using a second feature extractor of the trained predictor, a graphical representation of the second hardware arrangement; predicting, using the trained predictor, performance of the neural network model on the second hardware arrangement using the extracted graphical representation of the second hardware arrangement; comparing the predicted performance of the neural network model on the hardware arrangement and the predicted performance of the neural network model on the second hardware arrangement; and wherein outputting the predicted performance comprises outputting an indication of the performance of the neural network model on the hardware arrangement relative to the performance of the neural network model on the second hardware arrangement.

The hardware arrangement and the neural network model may be considered to be a first paired arrangement. The method of comparing two different hardware arrangements may be extended to comparing two different pairs of neural network models and hardware arrangements. Where there are different paired arrangements, at least one or both of the hardware arrangement and the neural network model is different.

The method may further comprise obtaining a graphical model for representing neural network models, wherein the graphical model comprises a plurality of connected nodes; and extracting, using the first feature extractor of the trained predictor, a graphical representation of the neural network model, wherein each of the operations is represented by one of the plurality of connected nodes. In other words, the first feature extractor may extract a graphical representation of the hardware arrangement in the first paired arrangement and a graphical representation of the neural network in the first paired arrangement.

The method may further comprise obtaining a second hardware arrangement comprising a plurality of interconnected components or devices and a second neural network model which is to be implemented on the second hardware arrangement; and extracting, using a second feature extractor of the trained predictor, a graphical representation of the second hardware arrangement and a graphical representation of the second neural network model. The second hardware arrangement and the second neural network model may be considered to be a second paired arrangement.

Where there are two paired arrangements, the method may further comprise predicting, using the trained predictor, performance of the neural network model on the hardware arrangement using the extracted graphical representation of the hardware arrangement and the extracted graphical representation of the neural network model and predicting, using the trained predictor, performance of the second neural network model on the second hardware arrangement using the extracted graphical representation of the second hardware arrangement and the extracted graphical representation of the second neural network model. The method may further comprise comparing the predicted performance of the neural network model on the hardware arrangement and the predicted performance of the second neural network model on the second hardware arrangement.

When comparing predicted performances, the predicted performance may be a performance score rather than an absolute value of the performance. Outputting the predicted performance may comprise outputting an indication of the performance of one arrangement relative to the performance of the second arrangement. For example, the indication may be a probability distribution which includes a first probability that the first paired arrangement is better than the second paired arrangement and a second probability that the second paired arrangement is better than the first paired arrangement. The comparing step may be performed by a classifier, e.g. a SoftMax classifier or a sigmoid classifier.

Each neural network model may be selected from a neural network model search space and similarly each hardware arrangement may be selected from a hardware search space. It will be appreciated that the method of predicting performance may be used to search through the plurality of designs of both hardware arrangement and neural network models to select an optimised combination. Thus, according to another approach of the present techniques, there is provided a method of designing hardware for implementing a neural network model, the method comprising obtaining a plurality of hardware arrangements; obtaining a plurality of neural network models; generating a plurality of paired combinations of neural network models and hardware arrangements, wherein each paired combination comprises a neural network model selected from the plurality of neural network models and a hardware arrangement selected from the plurality of hardware arrangements; predicting the relative performance of each paired combination using the method described above; ranking each paired combination based on the output relative performances and selecting the highest ranked paired combination.

The overall search space may thus be large but there may be a relatively small number of combination available for training. The search space may be denoted by M and there may be a budget of T models which can be trained and I iterations. The method may thus comprise an iterative data selection when training the predictor whereby the predictor is focussed on predicting rankings of top candidates. According to another approach of the present techniques, there is provided a method for training a predictor to be used in the method described above, the method comprising selecting a group of paired combinations from a search space of paired combinations; training the predictor using the selected group of paired combinations; predicting, after training, the relative performance of all paired combinations in the search space; ranking each paired combination in the search spaced based on the predicted relative performance; and repeating the selecting, training, predicting and ranking steps; wherein a first group of paired combinations is selected randomly and subsequent groups of paired combinations are a group of the highest ranked paired combinations.

In the arrangements described above, the graphical model for representing neural network models may have the same structure as the graphical model for representing hardware arrangements, i.e. both may comprise a plurality of connected nodes, including a global node. It will be appreciated that the nodes and the connections represent different features for neural network models and hardware arrangements. For the neural network each node may represent an operation. Extracting a graphical representation of the neural network model may comprise extracting a feature vector for each node of the plurality of connected nodes in the graphical model. The feature vector may comprise features of the operation, e.g. input, output, a 3x3 convolutional layer, a 1x1 convolutional layer and an averaging operation.

The method described above may be wholly or partly performed on an apparatus, i.e. an electronic device or server, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers, e.g. a graph convolutional network and/or a fully connected layer. Each of the plurality of neural network layers includes a plurality of weight values and performs neural network computation by computation between a result of computation by a previous layer and the plurality of weight values. The weight values may be obtained during training. The weights may be initialized during training, e.g. by randomly selecting the weights or by selecting the weights from a source predictor which has previously been trained on a different arrangement.

As mentioned above, the present techniques may be implemented using an Al model in the predictor and thus the predictor may be termed a machine learning predictor. A function associated with Al may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or Al model of a desired characteristic is made. The learning may be performed in a device itself in which Al according to an embodiment is performed, and/o may be implemented through a separate server/system.

In a related approach of the present techniques, there is provided a non-transitory data carrier carrying processor control code to implement the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

### Brief description of drawings

Implementations of the present techniques will now be described, by way of example only, with reference to the accompanying drawings, in which:
Figure 1 is a schematic diagram of a system to implement the present techniques;
Figure 2 is a schematic diagram of a machine learning predictor which may be incorporated in Figure 1;
Figure 3a is a flow chart of example steps to predict hardware performance for a fixed neural network model;
Figure 3b is an example graph which may be used in the method of Figure 3a;
Figures 3c, 3d and 3e each show a pair of matrices which may be used in the method of Figure 3a for a hardware arrangement which is a single-chip device, a system on chip device and a network-connected system respectively;
Figure 3f is an example of an output graphical representation;
Figure 4a is a flow chart of example steps to predict performance for a plurality of neural network models on a fixed hardware arrangement;
Figure 4b illustrates a pair of matrices which may be used in the method of Figure 4a;
Figure 5 is a schematic diagram of another machine learning predictor which may be incorporated in Figure 1;
Figure 6 is a flow chart of example steps to predict hardware performance using the predictor of Figure 5;
Figure 7 is a schematic diagram of another machine learning predictor which may be incorporated in Figure 1;
Figure 8 is a flow chart of example steps to predict hardware performance using the predictor of Figure 7;
Figure 9 is a schematic diagram of another machine learning predictor which may be incorporated in Figure 1;
Figure 10 is a flow chart of examples steps for training the predictors; and
Figures 11a and 11b are a flow chart showing two phases of a neural architecture search using the predictor of Figure 7.

### Detailed description of drawings

Broadly speaking, the present techniques relate to methods, apparatuses and systems for predicting the performance of a neural network model on a hardware arrangement and of searching for optimal paired combinations based on the performance. The techniques comprise obtaining absolute values for performance or comparing the relative performance of two or more inputs to rank the inputs. Graphical representations of one or both of the neural network model and hardware arrangements are extracted and used in the techniques.

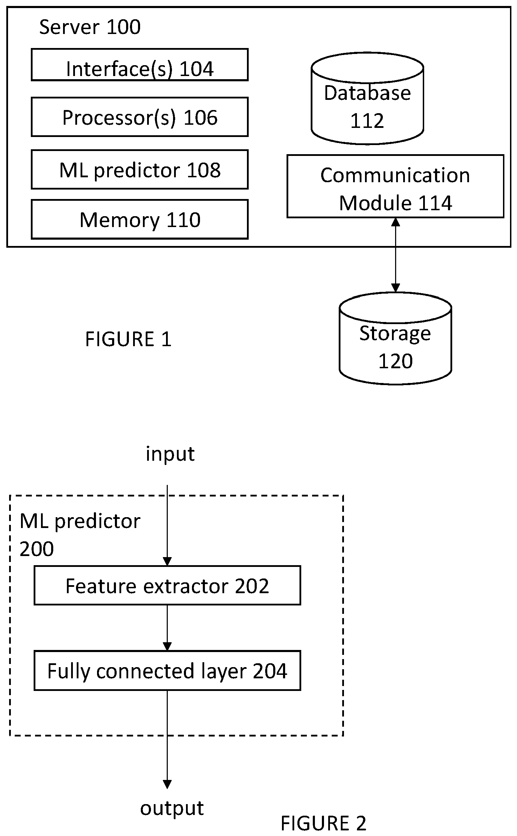

Figure 1 is a schematic diagram of a server 100 to implement the present techniques. The server 100 may comprise one or more interfaces 104 that enable the server 100 to receive inputs and/or provide outputs. For example, the server 100 may comprise a display screen to display the results of implementing a machine learning predictor (e.g. to predict performance as described below). The server 100 may comprise a user interface for receiving, from a user, a query to determine performance of a particular combination of neural network and hardware.

The server 100 may comprise at least one processor or processing circuitry 106. The processor 106 controls various processing operations performed by the server 100, such as implementing at least part of a machine learning predictor 108 on the server 100. The processor may comprise processing logic to process data and generate output data/messages in response to the processing. The processor may comprise one or more of: a microprocessor, a microcontroller, and an integrated circuit.

The server 100 may comprise memory 110. Memory 110 may comprise a volatile memory, such as random access memory (RAM), for use as temporary memory, and/or non-volatile memory such as Flash, read only memory (ROM), or electrically erasable programmable ROM (EEPROM), for storing data, programs, or instructions, for example.

The server 100 may comprise at least one machine learning (ML) predictor 108. The at least one machine learning predictor 108 may be stored in memory 110. As explained in more detail below, the at least one machine learning predictor 108 may comprise a source predictor and a target predictor. The source predictor may be used to initialise the weights used in the target predictor.

The server 100 may comprise a communication module 114 to enable the server 100 to communicate with other devices/machines/components (not shown), thus forming a system. The communication module 114 may be any communication module suitable for sending and receiving data. The communication module may communicate with other machines using any one or more of: wireless communication (e.g. WiFi), hypertext transfer protocol (HTTP), message queuing telemetry transport (MQTT), a wireless mobile telecommunication protocol, short range communication such as radio frequency communication (RFID) or near field communication (NFC), or by using the communication protocols specified by ZigBee, Thread, Bluetooth, Bluetooth LE, IPv6 over Low Power Wireless Standard (6LoWPAN), Constrained Application Protocol (CoAP), wired communication. The communication module 114 may use a wireless mobile (cellular) telecommunication protocol to communicate with machines in the system, e.g. 3G, 4G, 5G, 6G etc. The communication module 114 may communicate with machines in the system 100 using wired communication techniques, such as via metal cables or fibre optic cables. The server 100 may use more than one communication technique to communicate with other components. It will be understood that this is a non-exhaustive list of communication techniques that the communication module 114 may use. It will also be understood that intermediary devices (such as a gateway) may be located between the server 100 and other components in the system, to facilitate communication between the machines/components.

The server 100 may be a cloud-based server. The machine learning model of the present techniques may be trained in the server 100 for deployment on other electronic devices (not shown). The machine learning predictor 108 may have been trained using a training data set, which may be stored in storage 120 or database 112. Storage 120 or database 112 may be remote (i.e. separate) from the server 100 or may be incorporated in the server 100.

Figure 2 is a schematic block diagram illustrating one possible arrangement of the (or each) machine learning predictor of Figure 1. The machine learning predictor 200 comprises a feature extractor 202 and a fully connected layer 204. The feature extractor 202 may be a graph based feature extractor which extracts a graph based representation of the input(s). For example, the feature extractor 202 may a graph convolutional network comprising a plurality of layers. The number of layers may be between 1 and 10 layers and four layers may be a suitable number, for example as described in "BRP-NAS: Prediction based NAS using GCNs" by Dudziak et al published as arXIV:2007.08668. This paper is incorporated by reference. Any suitable feature extractor which extracts a graph based representation of the inputs may be used and other examples are described in "A comprehensive surface on graph neural networks" by Wu et al published in Journal of Latex Class Files in August 2019. The fully connected layer 204 is represented in this arrangement by a single layer but may include multiple layers which are adjusted to fit the complexity, suitable examples include 3 and 4 layers.

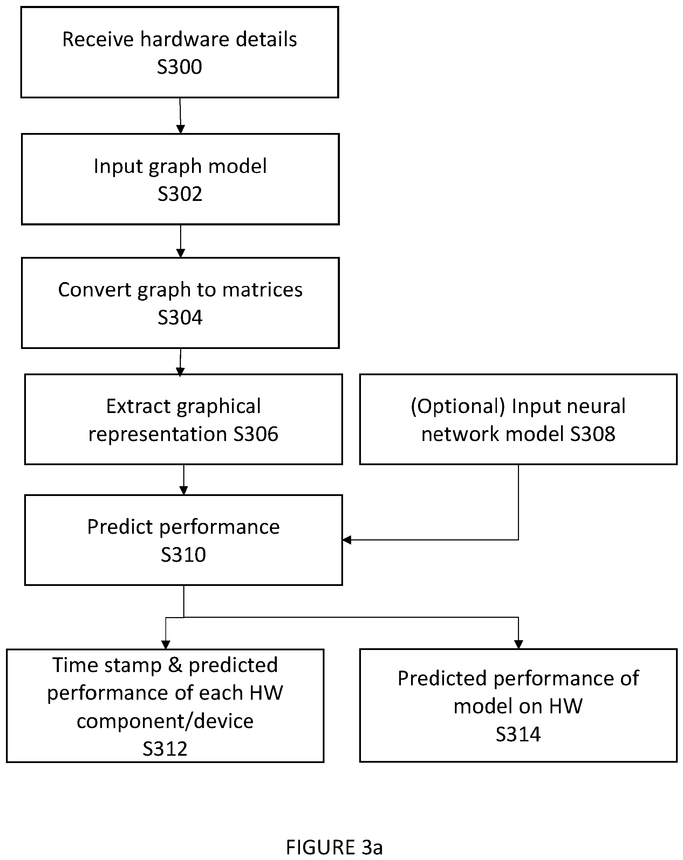

Figure 3a is a flow chart of example steps to perform performance prediction of a plurality of hardware arrangements implementing a fixed neural network model using the server of Figure 1 and particularly the predictor of Figure 2. The first step is to obtain (i.e. receive or input) hardware details (step S300). The details may be received by generating a plurality of designs and selecting a first hardware arrangement from the plurality of designs. The details of the hardware may include the type of components or devices within the hardware arrangement as well as other implementation details, such as bandwidth, clock frequency, memory size and information on the connections between the components and devices. The details are used to map the hardware arrangement to a graphical model and thus generate a graphical representation of the hardware arrangement as described below.

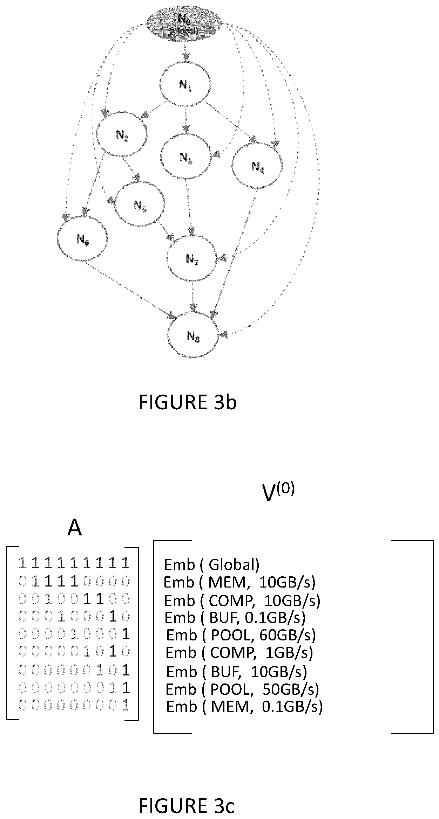

The next step is to obtain or input a graphical model which is suitable for representing the plurality of designs (step S302). An example of a graphical model is illustrated in Figure 3b. The graphical model is a computational graph which may be designed manually or generated automatically (e.g. by AutoML tools). The graphical model represents each hardware design as a plurality of connected nodes. In this example, there are eight nodes each of which represents a component or device within the hardware design. The edges of the graphical model (or graph) represent the connections between each component or device. It will be appreciated that the number shown in Figure 3b is merely indicative. The graph also includes a global node which is a node that connects to all the other models and may be used to capture the graph embedding of neural architecture by aggregating all node-level information.

Returning to Figure 3a and depending on the implementation of the machine learning predictor, the next step may be to convert the graph to matrices (step S304). For example, the graph may be converted to an adjacency matrix A and a feature matrix or vector V. Each entry Aᵢⱼ in the adjacency matrix is a connection from node i to node j. The adjacency matrix is typically asymmetric because the computation flow is represented as a directed graph as shown in Figure 3b. The feature matrix V may be a one-hot encoding, i.e. zero and skip-connect operations may be optimized out. Each feature vector Vᵢ^{(m)} is the embedding of node i encapsulating the node parameters at layer m in the feature extractor.

Examples of matrices are shown in Figures 3c to 3e. In Figure 3c, the plurality of hardware designs are each single-chip devices with multiple interconnected components. In this arrangement, the feature matrix comprises a function "emb" which encapsulates the parameters of the hardware components in a feature vector. The features which are encapsulated for each of the component nodes N₁ to N₈ are component type and bandwidth. In this example, the component types includes memory (MEM), computer processor (COMP), buffer (BUF) and pool (POOL) and the bandwidths range between 0.1GB/s and 60GB/s as indicated. However, it will be appreciated that these features are illustrative and others may be included.

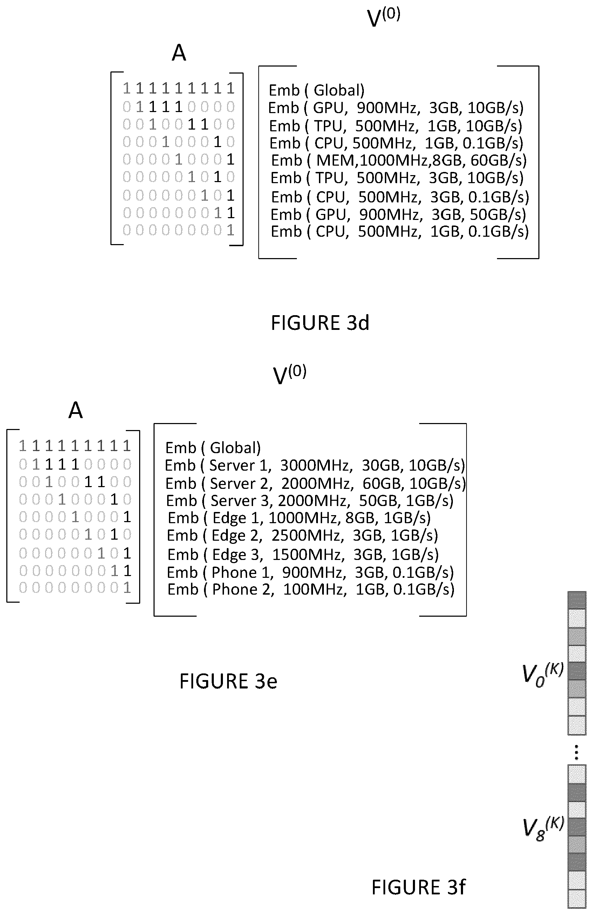

In Figure 3d, the plurality of hardware designs are each system on chip devices with multiple interconnected devices. As in Figure 3c, the feature matrix comprises a function "emb" which encapsulates the parameters of the hardware devices in a feature vector. In this arrangement, the features which are encapsulated for each of the component nodes N₁ to N₈ are processor type, clock frequency, memory size and bandwidth. Merely for illustration, the device types include devices having processor types selected from GPU, TPU, CPU and memory (MEM), the clock frequencies range between 500MHz and 100MHz, the memory sizes range between 1GB and 8GB and the bandwidths range between 0.1GB/s and 60GB/s as indicated.

In Figure 3e, the plurality of hardware designs are each systems with multiple network-connected devices. As in Figures 3c and 3d, the feature matrix comprises a function "emb" which encapsulates the parameters of the hardware devices in a feature vector. As in Figure 3d, the features in the feature vector for each of the component nodes N₁ to N₈ are device type, clock frequency, memory size and bandwidth. Merely for illustration, the device types include devices having processor types selected from server 1 to server 3, edge 1 to edge 3 and phone 1 or phone 2, the clock frequencies range between 100MHz and 3000MHz, the memory sizes range between 1GB and 60GB and the bandwidths range between 0.1GB/s and 10GB/s as indicated.

Returning to Figure 3a, the next step is to extract the graphical representation (step S306), e.g. using the feature extractor. For a feature extractor which uses a graph convolutional network having k layers, the input may be the adjacency matrix A and an initial feature matrix V⁰. The output is V^{k}. For each of the layers n=0 to n=k-1 in the feature extractor, the layer wise propagation rule is ${V}^{n + 1} = g \left({V}^{n}, A\right) \left[=σ\left({AV}^{n}{W}^{n}\right)\right]$ where Vⁿ and Wⁿ are the feature matrix and weight matrix at the *n-th* layer respectively, g is the propagation function. Where the propagation is a graph convolution, the propagation may be expressed using σ() which is a non-linear activation function like ReLU. This part specific to graph convolution is indicated in square brackets. During each iteration, each node aggregates labels of its neighbouring node via the function g and this aggregation is repeated the same number of times as there are layer. A schematic illustration of the output graphical representation is shown in Figure 3f and there is a feature vector output for each node, including the global node.

As shown above, the step of extracting a graphical representation comprises using one or more weight matrices. Each layer may have a different matrix. The weights may be determined during training. Before training, the weights may be randomly initialised or optionally initialised by the weights of another trained predictor which may be termed a source predictor. The source predictor may be configured in the same way as the feature extractor shown in Figure 2. Merely, as an example, the source predictor may have been used to predict the latency of the same set of hardware designs implementing a different fixed neural network model.

The next illustrated step is an optional one. If the predictor has been trained to predict the performance of hardware on a fixed neural network, the predictor may be used to predict the performance of the new hardware details without further information about the neural network model. However, if there are multiple predictors, each of which targets a different neural network model, it is necessary to input the neural network algorithm or model which is to be implemented on the plurality of hardware designs at step S308. This input will help distinguish the different models but is described as optional because it may not be necessary. It will be appreciated that, if used, this step can be done simultaneously with any of steps S300 to S304 (not just S306 as schematically illustrated). Similarly, this inputting step may be done before or after steps S300 to S308.

The next step is to predict the performance of the input fixed neural network on each of the set of hardware designs (step S310). The performance may be predicted using the feature vectors which were output from the feature extractor. For example, each output feature vector is input to the fully connected layer which outputs the performance. The fully connected layer is trained as explained in more detail to map these representations of the nodes (including the global node) to performance metrics. The predicted performance may also use weights for each feature in the vector. As above, the weights may be determined during training. At this step, which is an inference step, the trained weights may be loaded to the predictor. Each output of the fully connected layer (FC) corresponds as shown in Figure 3f to the performance prediction for each node, i.e. for each component in the arrangement of Figure 3c in which there is a single-chip device or for each device in the arrangements of Figures 3d and 3e which are system on chip and a network connected system respectively.

Returning to Figure 3a, one possible output as shown in step S312 is to predict the individual performance of each component (Figure 3c) or each device (Figures 3d and 3e) and an associated time stamp if required. This may be done using the outputs generated by each of the output feature vectors for the nodes N₁ to N₈. The use of a global node also means that as shown in step S314, the performance of the model on each hardware set-up as a global arrangement, e.g. a single-chip device, a system on chip or a network connected system, may be output. Different performance metrics may be output as desired and may include one or more of accuracy, latency, energy consumption, thermals and memory utilization. For example, latency or energy consumption for each component/device and overall latency for the hardware may be predicted. Alternatively, overall latency may be predicted and a measure of the utilization of each device may be predicted - this may be particularly appropriate for the system-on-chip arrangement in Figure 3d. The prediction whether for an individual component/device or for the whole system is an absolute value for the selected performance metric.

As set out above, the details of the hardware arrangement may be obtained by generating a plurality of designs and selecting a first hardware arrangement from the plurality of designs. It will thus be appreciated that the performance may be predicted for some or all of the hardware designs which are generated in this initial step. In this way, the method of Figure 3a may be used in a search for a neural architecture design. For example, the performance of the fixed neural network model on each hardware arrangement may be predicted and then compared. The hardware arrangement having a preferred or optimal predicted performance may then be selected.

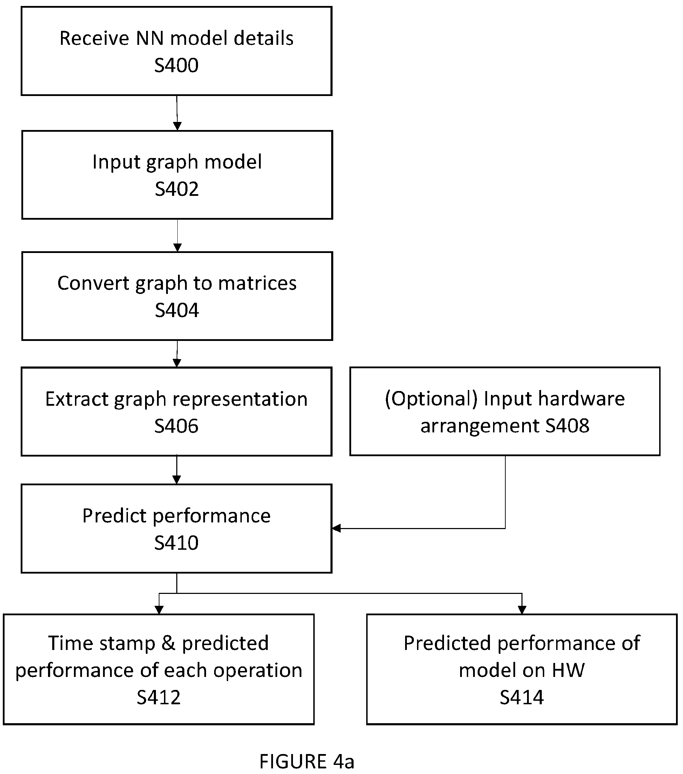

Figure 4a illustrates another method which may be implemented using the predictor shown in Figure 2. In this method, the performance of different neural network models may be evaluated for a fixed hardware arrangement in contrast to the performance of a fixed NN model on different hardware arrangements. The first step is to receive or input NN model details (step S400). The details may be received by generating a plurality of designs. The next step is to input a graphical model of the plurality of designs (step S402). For the sake of simplicity, the graph used in this method is the same as the one shown in Figure 3b. In this arrangement, the nodes N₁ to N₈ each represent an operation of a layer within the model and the computational flow is represented by an edge. There is also a global node as before. However, it will be appreciated that different graphs may be used if appropriate.

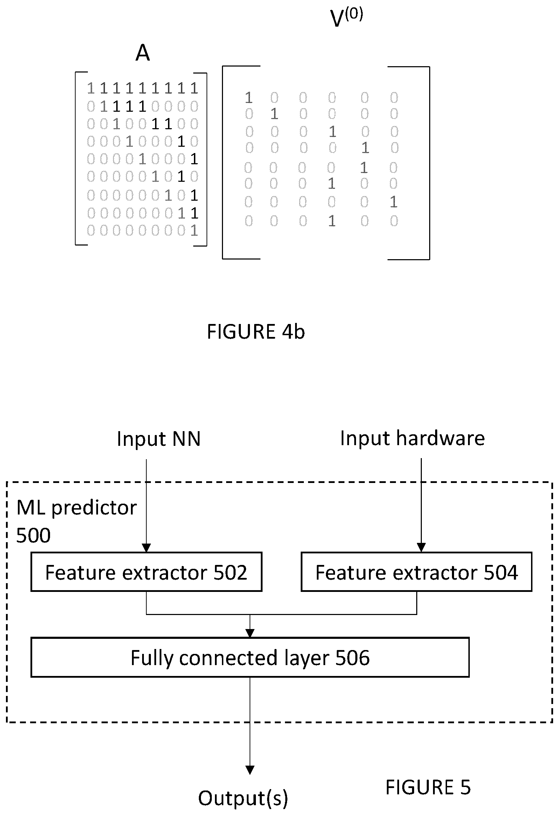

As in Figure 3a, the next step may be to convert the graph to matrices (step S404). An example adjacency matrix A and feature matrix V is shown in Figure 4b. In this arrangement, as above each row is a one-hot vector encoding the features of an operation. The function "emb" is used to encapsulate the parameters of the neural network model in a feature vector. As an example, the features illustrated here include the global operation, an input, an output, a 3x3 convolutional layer, a 1x1 convolutional layer and an averaging operation. It will be appreciated that the use of one-hot encoding is an example for illustration. The features illustrated are also merely indicative.

Returning to Figure 4a, the next step is to extract the graphical representation (step S406), e.g. using the feature extractor. The layer wise propagation rule may be the same as listed above. As above, where weight matrices are used, the weights used for extracting the graph representation may be generated during training, optionally initialising based on weights from a source predictor. Merely as an example, during training a source predictor may be trained to predict the accuracy of the same fixed hardware arrangement, the latency of a different hardware arrangement or even an energy prediction for a different hardware arrangement.

In a similar manner to Figure 3a, if the predictor has been trained to predict the performance of a neural network model for a fixed hardware design, the predictor may be used to predict the performance of the new neural network models without further information about the hardware design. However, if there are multiple predictors, each of which targets a different hardware design, it is necessary to input the hardware arrangement on which each of the neural network models are to be implemented (step S408). As before, the order of the steps may be changed. Thus, this step is optional depending on the circumstance.

The next step is to predict the performance of each input neural network model on the fixed hardware design (step S410). The performance may be predicted using the feature vector outputs from the feature extractor which are input to the fully connected layer. One possible output as shown in step S412 is to predict the performance of each operation and an associated time stamp if required. The use of a global node also means that as shown in step S414, the performance of each model on the hardware may also be output. Typically, overall latency may be predicted together with the latency associated with each operation.

Figure 5 is a schematic block diagram illustrating another possible arrangement of the (or each) machine learning predictor of Figure 1. The machine learning predictor 500 comprises a first feature extractor 502, a second feature extractor 504 and a fully connected layer 506. As before, each feature extractor 502,504 may be a graph based feature extractor which extracts a graph based representation of the input(s). In this arrangement, the first feature extractor 502 extracts a graphical representation of an input neural network model and the second feature extractor 504 extracts a graphical representation of an input hardware arrangement. The graphical representations are combined by the fully connected layer 506 to generate one or more outputs as described below.

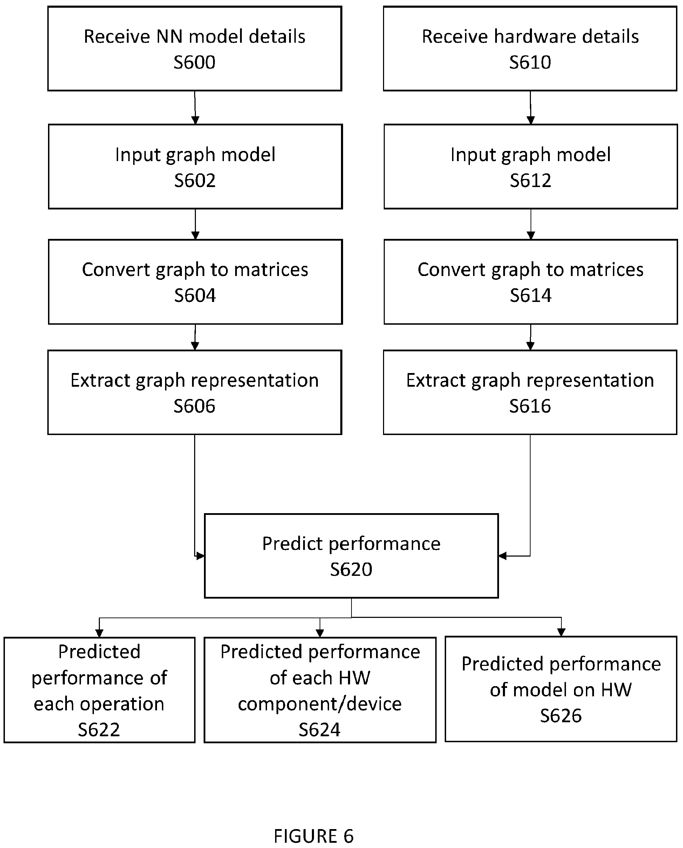

Figure 6 is a flow chart illustrating steps to perform performance prediction using the server of Figure 1 and particularly the predictor of Figure 5. This method essentially combines the features of Figures 3a and 4a to predict performance of new hardware arrangements running unseen models. As illustrated, the first step is to receive or input neural network models (step S600) and then to input a graphical model of the plurality of designs (step S602). The graphical model may be represented as matrices (step S604) so that a final graphical representation may be extracted using the feature extractor (step S606). The steps S600 to S604 are the same as steps S400 and S404 in Figure 4a.

The method also requires receives or inputting hardware details (step S610) and then inputting a graphical model of the plurality of designs (step S612). The graphical model may be represented as matrices (step S614) so that a final graphical representation may be extracted using the feature extractor (step S616). The steps S610 to S614 are the same as steps S300 and S304 in Figure 3a.

The first and second feature extractors may each use a graph convolutional network having k layers. The inputs to the first feature extractor may be the adjacency matrix A_{N} and an initial feature matrix V_{N}⁰ both of which describe the neural network model. The inputs to the second feature extractor may be the adjacency matrix A_{H} and an initial feature matrix V_{H}⁰ both of which describe hardware arrangement. For each of the layers n=0 to n=k-1 in each feature extractor, the layer wise propagation rule is, respectively ${{V}_{N}}^{n + 1} = g \left({{V}_{N}}^{n}, {A}_{N}\right) = σ \left({A}_{N}{{V}_{N}}^{n}{{W}_{N}}^{n}\right)$ ${{V}_{H}}^{n + 1} = g \left({{V}_{H}}^{n}, {A}_{N}\right) = σ \left({A}_{H}{{V}_{H}}^{n}{{W}_{H}}^{n}\right)$ where W_{H}ⁿ and W_{N}ⁿ are the weight matrices for the hardware arrangement and the neural network model respectively at the *n-th* layer, g is the propagation function and σ() is a non-linear activation function like ReLU which is specific to graph convolution as described above. During each iteration, each node aggregates labels of its neighbouring node via the function g and this aggregation is repeated the same number of times as there are layers.

As before, in the example in which graph convolution is used, one or more weight matrices are used. Accordingly, there may be a step (not shown) of loading the weights before extracting the graphical representations in steps S606 or S616. The weights may be obtained during the training of the predictor, including optionally initialising based on weights from a source predictor.

The next step is to predict the performance of each input neural network model on each hardware design (step S620). The performance may be predicted using the feature vectors which are output from the first and second feature extractors respectively. There are more inputs and thus more outputs. As before, weights may also be used in this process and the weights may be obtained during training as explained above.

One possible output as shown in step S622 is to predict the performance of each operation in each neural network model. Another possible output as shown in step S624 is to predict the performance of each component/device in each hardware arrangement. As shown in step S626, the performance of each model on each hardware arrangement may also be output.

In this arrangement, the details of the hardware arrangement may be obtained by generating a plurality of designs and similarly the details of the neural network model may be obtained by generating a plurality of designs. The hardware arrangements and the neural network models may be paired to generate a plurality of paired combinations. Each paired combination has a hardware arrangement associated with a neural network model. Each paired combination thus comprises a neural network model selected from the plurality of neural network models and a hardware arrangement selected from the plurality of hardware arrangements. It will be appreciated that the same neural network model may be selected multiple times and paired with different hardware arrangements and vice versa. Accordingly, the search space is large. The performance may be predicted for some or all of the paired combination. In this way, the method of Figure 6 may be used in a search for a neural architecture design. For example, the performance of each paired combination may be predicted and then compared. The paired combination having a preferred or optimal predicted performance may then be selected.

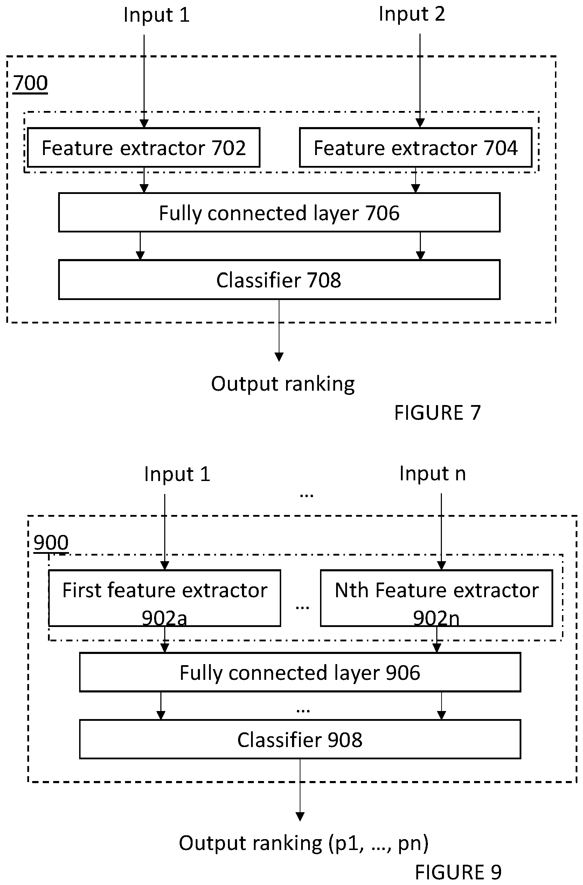

Figure 7 is a schematic block diagram illustrating another possible arrangement of the (or each) machine learning predictor of Figure 1. As in Figure 5, the machine learning predictor 700 comprises a first feature extractor 702, a second feature extractor 704 and a fully connected layer 706. However, in contrast to the arrangements described above in which absolute values of performance metrics are output, in this arrangement, the machine learning predictor does not produce faithful estimates but simply preserves the ranking of the models and the hardware. This may be particularly useful as described below when attempting to obtain the best results in NAS because it is typically more important to focus on accurately predicting which are the best performing candidates rather than accurately predicting the absolute values. Thus, the machine learning predictor also comprises a classifier 708 which compares the results from the fully connected layer and outputs a ranking.

As before, each feature extractor 702, 704 may be a graph based feature extractor each of which extracts a graph based representation of the input received at that extractor. A dashed line is shown around the feature extractors to illustrate that both share weights, i.e. have the same weights. In other words, each input may be processed by an identical feature extractor. In this arrangement, the input to each feature extractor must be directly comparable. Accordingly, if the input to the first feature extractor 702 is a neural network model, the input to the second feature extractor 704 is a different neural network model. Thus, each feature extractor extracts a graphical representation of the input neural network model as described in step S406 of Figure 4a. Similarly, if the input to the first feature extractor 702 is a hardware arrangement, the input to the second feature extractor 704 is a different hardware arrangement. Thus, each feature extractor extracts a graphical representation of the input hardware arrangement as described in step S306 of Figure 3a. The arrangement of Figure 7 also allows a paired combination of neural network model and hardware arrangement to be input to the first feature extractor 702 and a different paired combination of neural network model and hardware arrangement to be input to the second feature extractor 704. In the second paired combination, one or both of the neural network model and hardware arrangement may be different.

Each feature extractor 702, 704 extracts a graphical representation of the input which it received. The two graphical representations are then separately used to predict the performance of each input using the fully connected layer. If the inputs are both neural network models, a fixed hardware arrangement is optionally input as described in relation to step S408 of Figure 4a so that the performance of each input may be predicted using the fully connected layer 706 as described in step S410 of Figure 4a. Similarly, if the inputs are both hardware arrangements, a fixed neural network model is optionally input as described in relation to step S308 of Figure 3a so that the performance of each input may be predicted using the fully connected layer 706 as described in step S310 of Figure 3a. The inputs may also be two paired arrangements of neural network model and hardware arrangement. A dashed line is shown around the feature extractors to illustrate that both share weights.

For each graphical representation, a performance score is generated and may be input to the classifier as a two-valued vector (score 1, score 2). The two performance scores from the fully connected layer 706 are then compared using the classifier 708. The classifier may be any suitable module, e.g. a SoftMax classifier or a sigmoid classifier. Merely as an example, the SoftMax classifier may use the equation: $σ {\left(\vec{z}\right)}_{i} = \frac{{e}^{{z}_{i}}}{{\sum }_{j = 1}^{K} {e}^{{z}_{j}}}$ where z is the input vector (z₀, ..., z_{K}) - i.e. the vector of performance scores, zᵢ is an element within the input vector and can have any real value (positive, negative or zero), K is the number of classes in the multi-class classifier, e.g. 2 in the binary relation predictor. It is noted that the sum on the bottom of the formula is a normalisation term and ensures that all the output values of the function will sum to 1, thus constituting a valid probability distribution.

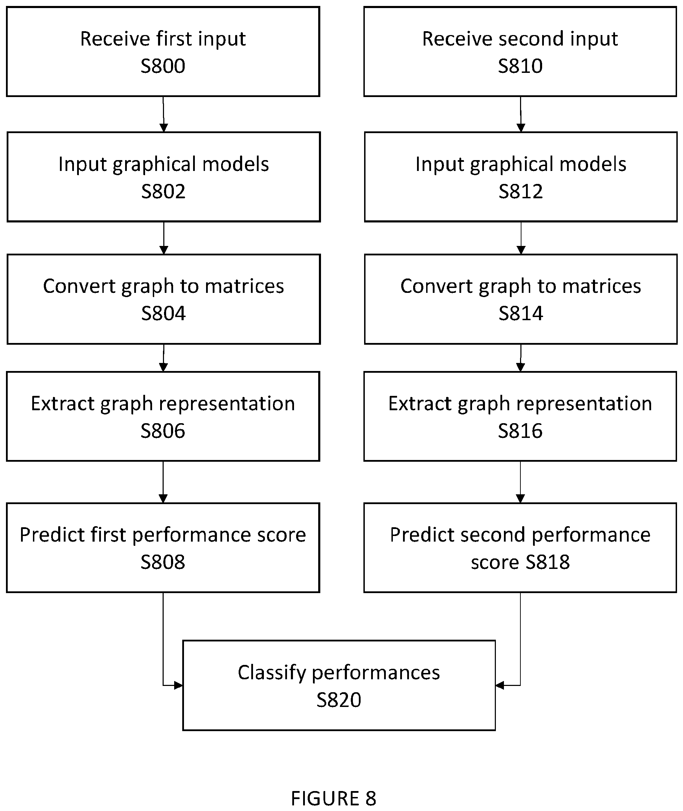

Figure 8 is a flow chart illustrating steps to perform performance prediction using the server of Figure 1 and particularly the machine learning predictor of Figure 7 when the inputs are paired combinations of neural network models and hardware arrangements. As illustrated, the first steps are to receive a first input S800 and in parallel receive a second input S810. Each of the first and second input may be a paired combination of a neural network model implemented on a hardware arrangement. Each neural network model and each hardware arranged may be selected from a plurality of designs which have been generated manually or automatically. The next step for each input is to input graphical models (steps S802, S812) and for each paired combination, a graphical model for the neural network model and a graph model for the hardware arrangement is input. The graphical models may also be generated manually or automatically as described above.

As before, the graphical models may be represented as matrices (steps S804, S814) so that a final graphical representation may be extracted using the first and second feature extractors, respectively (steps S806, S816). The first and second feature extractors may each use a graph convolutional network having k layers. The inputs to the first feature extractor may be the adjacency matrix A_{N1} and an initial feature matrix V_{N1}⁰ both of which describe the first neural network model together with the adjacency matrix A_{H1} and an initial feature matrix V_{H1}⁰ both of which describe the first hardware arrangement. The inputs to the second feature extractor may be the adjacency matrix A_{N2} and an initial feature matrix V_{N2}⁰ both of which describe the second neural network model together with the adjacency matrix A_{H2} and an initial feature matrix V_{H2}⁰ both of which describe the second hardware arrangement. For each of the layers n=0 to n=k-1 in the first feature extractor, the layer wise propagation rule is, respectively ${{V}_{N 1}}^{n + 1} = g \left({{V}_{N 1}}^{n}, {A}_{N 1}\right) = σ \left({A}_{N 1}{{V}_{N 1}}^{n}{{W}_{N 1}}^{n}\right)$ ${{V}_{H 1}}^{n + 1} = g \left({{V}_{H 1}}^{n}, {A}_{N 1}\right) = σ \left({A}_{H 1}{{V}_{H 1}}^{n}{{W}_{H 1}}^{n}\right)$ where W_{H1}ⁿ and W_{N1}ⁿ are the weight matrices for the first hardware arrangement and the first neural network model respectively at the *n-th* layer, g is the propagation function and σ() is a non-linear activation function specific to graph convolution as described above. Similarly, for each of the layers n=0 to n=k-1 in the second feature extractor, the layer wise propagation rule is, respectively ${{V}_{N 2}}^{n + 1} = g \left({{V}_{N 2}}^{n}, {A}_{N 2}\right) = σ \left({A}_{N 2}{{V}_{N 2}}^{n}{{W}_{N 2}}^{n}\right)$ ${{V}_{H 2}}^{n + 1} = g \left({{V}_{H 2}}^{n}, {A}_{N 2}\right) = σ \left({A}_{H 2}{{V}_{H 2}}^{n}{{W}_{H 2}}^{n}\right)$ where W_{H2}ⁿ and W_{N2}ⁿ are the weight matrices for the second hardware arrangement and the second neural network model respectively at the *n-th* layer, g is the propagation function and σ() is a non-linear activation function specific to graph convolution as described above.

As before, in the graph convolution method, there are a plurality of weight matrices. The weights may be obtained during training, including using optional initialisation from a source predictor. The weights obtained from training may be input before the graphical representations are extracted.

Once the graphical representations are output, the next steps are to predict the performance of the first neural network model on the first hardware design (step S808) and to predict the performance of the second neural network model on the second hardware design (step S818). The performance may be predicted using the feature vectors which are output from the first and second feature extractors respectively. The output first and second performance scores may simply be scores which are representative of the performance of each paired model and hardware arrangement. It is not necessary for the scores to be as accurate as the outputs described in the previous arrangements, the scores simply need to be sufficiently accurate to allow the final step.

As shown in step S820, the final step is to classify the performances of each paired model and hardware arrangement relative to each other. In other words, the first paired model and hardware arrangement is ranked higher or lower than the second paired model and hardware arrangement based on a comparison of the first and second performance scores. The classification may be in the form of a probability distribution, e.g. (0.9, 0.1) which shows that the probability that the first input is better than the second input is 90% and the probability that the second input is better than the first input is 10%. In other words, the first paired arrangement of model and hardware is ranked higher than the second paired arrangement and there is also a confidence score associated with this ranking.

Comparing a pair of inputs in such a way may be termed prediction in binary relation. It will be appreciated that the methodology may be expanded to allow multiple arrangements to be compared and a predictor for such an N-ary relation prediction this is schematically illustrated in Figure 9.

Figure 9 is a schematic block diagram illustrating another possible arrangement of the (or each) machine learning predictor of Figure 1. The machine learning predictor 900 comprises a plurality of feature extractors 902a, ... 902n. Only two are illustrated for simplicity. Each feature extractor receives a separate input and all the inputs are directly comparable. For example, the inputs may be a plurality of neural network models, a plurality of hardware arrangements or a plurality of paired neural network models and hardware arrangements. Each feature extractor extracts a graphical representation of the input which it received and as in the binary arrangement, each feature extractor shares weights. The two graphical representations are then separately used to predict the performance of each input using the fully connected layer 906. The plurality of performance scores, e.g. (score 1, ..., score n) are output from the fully connected layer 906 as an n-valued vector and are then compared using the classifier 908. The classifier ranks the performances and may optionally output a confidence score associated with the ranking.

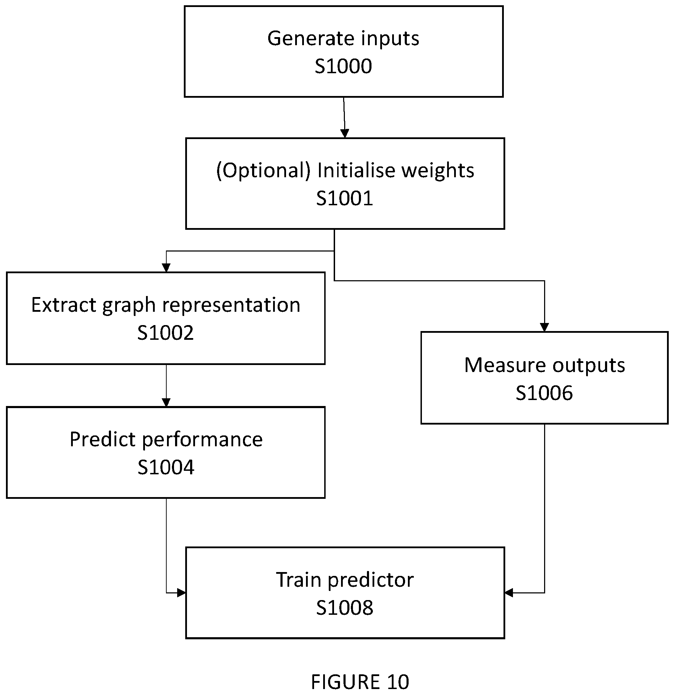

As referenced above, each of the predictors needs to be trained and Figure 10 illustrates one method of training the machine learning predictors, particularly those shown in Figures 2 and 5. In a first step S1000, a plurality of inputs are generated. The inputs will depend on whether the predictor is being used to predict the performance of a neural network only, a hardware arrangement only or a paired combination of neural network and hardware arrangement.

As explained above, the predictor may use one or more weights, for example weight matrices in the graph convolution method for extracting a graphical representation, and/or one or weights in the fully connected layer for predicting performance. These weights may be obtained during the training stage. An initial value for the weights needs to be input. As illustrated, this may be done by optionally initialising the weights based on the weights obtained from training another predictor, termed a source predictor. Alternatively, the weights may be randomly generated.

As explained above, the metrics may be one or more of accuracy, latency, energy consumption, thermals and memory utilization. Where possible, the measured metric should also match the predicted metric. However, it may be possible that the measured data is not available in large quantities for all models and hardware or may be too costly to acquire in large quantities. When the data is not available or too costly, the predictor may be initially trained on another measured metric, e.g. latency, for which there is a larger, less expensive dataset. The predictor may then be fine-tuned using the smaller set of training data available for the targeted metric, e.g. accuracy. Such training may be termed transfer learning. For example, a dataset may contain 10,000 models without any accuracy measurements but the latency of 1000 of these models has been measured. Accordingly, a latency predictor may be trained using the 1000 models and then transferred to an accuracy predictor. For example, the weights of the accuracy predictor may be initialised with those of the latency predictor

As explained above, a graph representation is extracted (step S1002) using the feature extractor(s) and the performance of each output graph representation is predicted (step S1004). When the input is one of a plurality of hardware arrangements, as described in Figure 3a, the performance metrics which are output may be one or both of the predicted performance of each hardware component/device and the predicted performance of a fixed neural network model on the whole hardware arrangement. When the input is one of a plurality of neural network models, as described in Figure 4a, the performance metrics which are output may be one or both of the predicted performance of each operation and the predicted performance of the neural network model running on a fixed hardware arrangement. When the input is a paired neural network model and hardware arrangement, as described in Figure 6, the performance metrics which are output may be one or all of the predicted performance of each operation, the predicted performance of each hardware component/device and the predicted performance of the neural network model running on the paired hardware arrangement.

The predictor is trained with measurements of the performance of neural network models on hardware arrangements. Thus, as illustrated in Figure 10, the training process includes a step S1006 of measuring outputs. For optimal training, the measured outputs should match the predicted outputs of the predictor. Thus, if the predictor is predicting performance of each hardware component/device and the predicted performance of a fixed neural network model on the whole hardware arrangement, the measurements must be the measured performance of each hardware component/device and the measured performance of a fixed neural network model on the whole hardware arrangement. Similarly, if the predictor is predicting performance of each operation and the predicted performance of the neural network model on a fixed hardware arrangement, the measurements must be the measured performance of each operation and the measured performance of the neural network model on the hardware arrangement.

The measurements are used to train the predictor (step S1008) as is well known in the art. For example, the measurements are compared to the output predictions and the objective is to minimise the difference between the prediction and the measured value. Merely as an example, the predictor may be trained using a randomly sampled set of 900 models from a database, such as the NAS-Bench-201 dataset. 100 random models may be used for validation and the remaining models within the dataset may be used for testing. As explained above, in relation to step S1001, the training may include a first step in which the predictor is trained using a large dataset which relates to a different performance metric and is then fine-tuned on a smaller dataset which relates to the target performance metric. The training may result in the weights for the extraction and/or prediction steps being obtained.

In the predictors of Figures 7 and 9, the output is a ranking of the relative performance of the inputs. For the arrangement of Figure 7, the output is a pair of probabilities (p₁, p₂) where p₁ is the probability that the first pairing is better than the second pairing and p₂ is the probability of the opposite. This is extended in Figure 9 to output a set of probabilities (p₁, ..., pₙ) where p₁ is the probability that the first pairing is better than all the other pairings. The output set of probabilities may be termed a distribution. The training of such predictors may compare the output distribution to the distribution obtained from the ground-truth accuracy of the two models. In other words, the measured values may be compared to determine the correct ranking or distribution - ground truth. This ground truth distribution is compared with the predicted distribution and the objective of the training step is to minimise the difference between the two distributions.

An application of the methods described above is in a neural architecture search (NAS). As described above, NAS permits the design of a competitive neural network. As described in "BRP-NAS: Prediction based NAS using GCNs" by Dudziak et al published as arXIV:2007.08668. The cost of NAS critically depends on the sample efficiency, which reflects how many models need to be trained and evaluated during the search. In many of the methods described above, the neural network is considered together with its associated hardware design. Thus, the methods described above may also be used to design the hardware to efficiently implement the competitive neural network model.

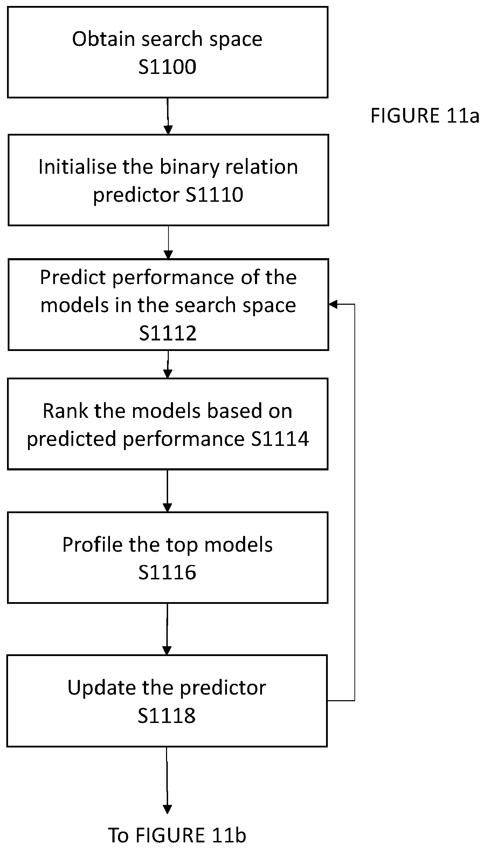

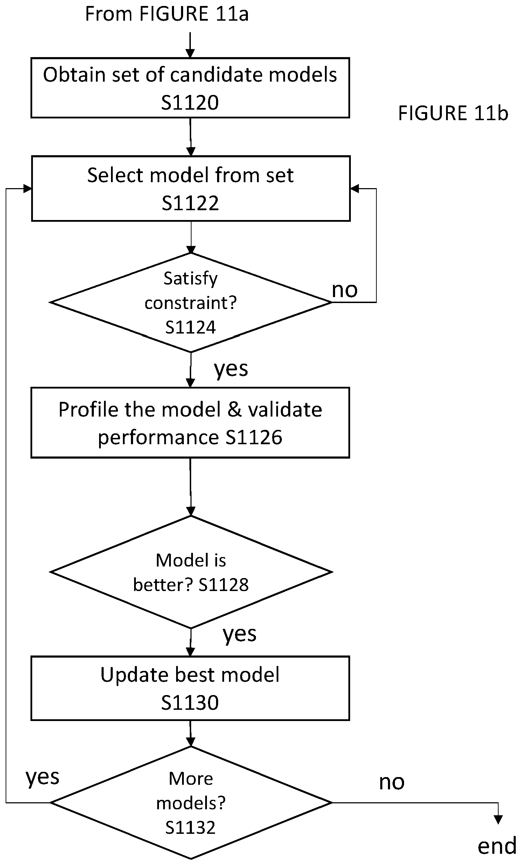

The binary relation predictor described in Figure 8 may be applied in a neural architecture search as illustrated in Figures 11a and 11b. Figure 11a illustrates a first phase of the search which may be termed a training phase. In this phase, the binary relation predictor is trained via an iterative data selection. Figure 11b follows from Figure 11a and illustrates a second phase in which a search for the best model is conducted using the trained predictor.

As shown in Figure 11a, the first step S1100 is to obtain the search space. We are considering models which pair both neural network models and associated hardware arrangements and thus the search space is large. The search space may be denoted by M and there may be a budget of T models which can be trained and I iterations. The next step S1110 may be termed an initialisation step. In this initialisation step, a random sample of K models may be selected from the search space M. K is a much smaller number than the total number of models in the search space. Optionally the weights may be initialised using the weights from an existing predictor. The predictor is then trained, during the initialisation phase, based on these K models.

The next phase is to predict performance (step S1112) of all the models in the search space using the predictor which was trained on K models in the initialisation phase. The predicted performance may use accuracy as a performance metric. The predicted performance is used to rank all the models by the pairwise comparison process described previously (step S1114).

Once the top ranked models have been identified, a set of the top models are selected. For example, the set may comprise the top α*T/I models together with another (1-α)*T/I models from the top M/2ⁱ models where α is a factor between 0 and 1 and *i* is the iteration counter. There is then a profiling step (step S1116) in which the set of top models may be profiled or fully trained depending on the nature of the performance metric. The binary relation predictor may be trained using the relative performance of each pair of models. By fully trained, the predictor is trained "properly", that is, in the same way the predictor would be trained if the training was taking place outside of NAS. By contrast, some NAS methods, while searching for good models, use approximated/fast training schemes instead of training until convergence (usually referred to as "proxy-task training"). Tuning α results in a trade-off between exploitation and exploration and thus α=0.5 may be used to give a balance.

As an illustrative example of step S1116, consider using accuracy as the performance metric. The previous step S1114 ranks the models according to the "predicted" accuracy. Thus, in step S1116, the top ranked models are selected and then trained to obtain the "ground-truth" accuracy. The training may be done as shown in Figure 10 or using any known techniques. Similarly, as another illustrative example, step S1114 may have been used to rank the models according to the "predicted" latency. Thus, in step S1116, the top ranked models are selected and then profiled to obtain the "ground-truth" latency. In each case (latency or accuracy as performance metric), any models failing a constraint as explained below, may be rejected.

The trained predictor may then be updated using the models with "ground-truth" performance (step S1118). These models may then be used to update the predictor. As illustrated in Figure 11a, further training may be done by iterating through the predict, rank and profile steps and the training process may be terminated after *i* iterations.

An algorithm which may be used to carry out the steps of Figure 11a is set out below and the notes are denoted by //.

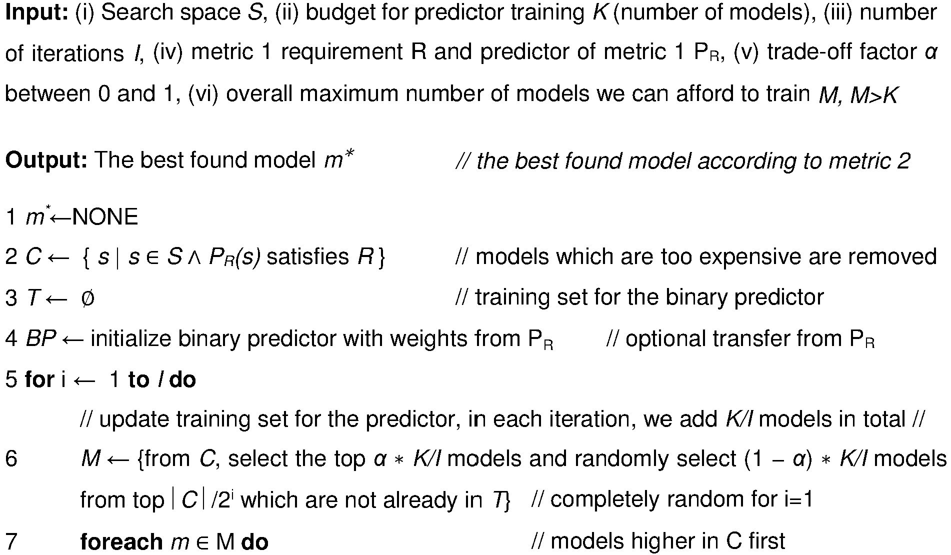

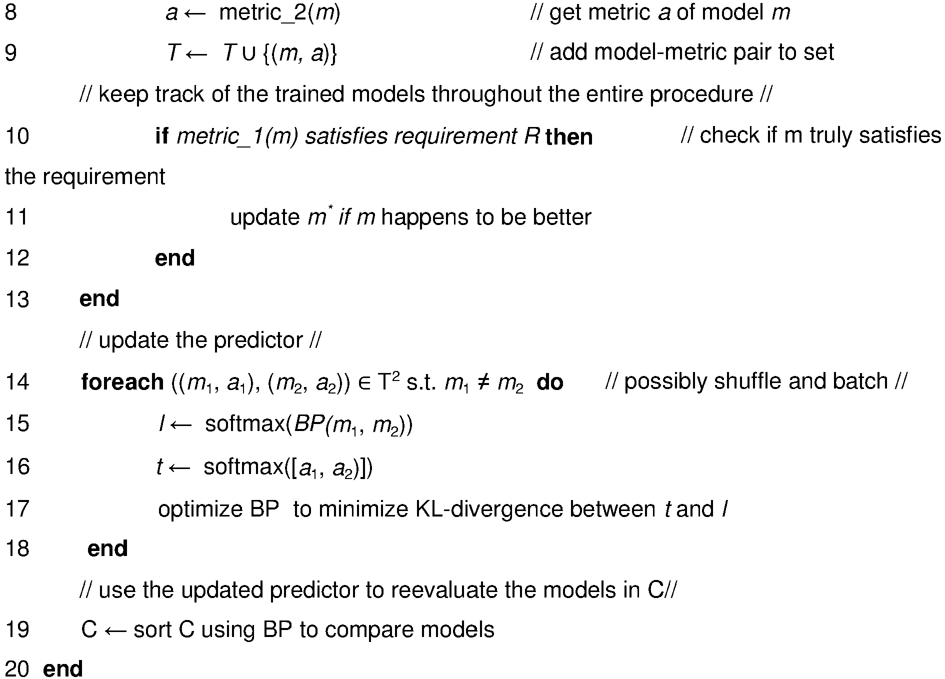

In the algorithm above, the set of models which are used to train the predictor are denoted by T. Trained models are stored as pairs (model, performance) and the predictor is trained by taking all possible pairs (m1, a1), (m2, a2) from the set T and optimised towards reducing the KL-divergence between the probability distributions constructed by the binary predictor (line 15 in the algorithm) and the "measured" performance of the two models obtained by their training (line 16). The optimisation may be done using any optimizer etc., and in deep learning these usually rely on backpropagation and stochastic gradient descent (or one of its many variations). For example, the optimizer may be the optimizer termed AdamW (described in "Decoupled Weight Decay Regularization by Loshchilov et al published by Cornell University in Computer Science, Machine Learning in November 2017). Training of the predictor is done iteratively, so in each iteration 1) some models from the search space are trained and included in the training set of the predictor, 2) the predictor is updated, 3) the predictor is used to re-score untrained models in the search space in order to pick the good ones in step 1 of the next iteration.

Once the training is complete as shown in Figure 11a and the possible algorithm above, the candidate models in C are ordered by using the trained predictor to score and sort the models. The method may now move to a search phase as illustrated in Figure 11b and there is no further training of the predictor at this stage. The searching phase starts by obtaining a set of candidate models *M* which represent those models having the best performance as determined by the trained predictor (step S1120).

A model *m* is then selected from the set *M* (step S1122) and it is determined whether or not the model satisfies a constraint based on performance (step S1124). For examples, the constraint may be to determine whether the latency of the selected model is below a maximum acceptable value for latency. If the model does not satisfy the constraint, it is discarded and another model is selected. It is noted that the constraint is only considered to ensure that the returned best model matches the constraint. In other words, the constraint (in this case based on latency) is not considered when training the predictor or deciding if a (model, accuracy) pair should be included in the training set of the predictor

If the constraint is satisfied, the model may be profiled to obtain the ground truth values to validate the selection. In other words, the performance of the selected model is then profiled and validated (step S1126). The method then determines whether the selected model is better than the current best model (step S1128). If the model is better, the best model *m** is updated and the method moves to the next step. When the model is not better, the update is skipped and the method moves the next step.

The next step is to determine whether there are any more models *m* in the set *M* which have not yet been evaluated (step S1130). If there are further models to evaluate, the method loops back and selects the next model. The process is then repeated. When there are no more models to consider, the process is ended and the best model *m** is output.

An algorithm which may be used to carry out the steps of Figure 11b is set out below, using the terminology above:

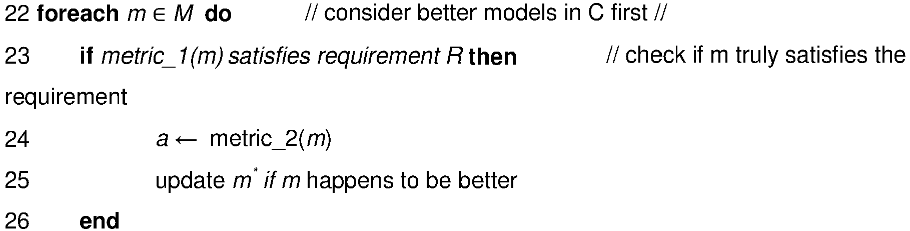

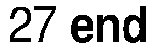

By focussing on high performing models, the search process above is able to find better models. After the first iteration, the method described above is able to aggressively search for better models, thus increasing its exploitation and reducing its exploration in every following iteration.

In summary, the graph-based approach described above reflects the key elements and characteristics of one or both of the neural network model and hardware arrangements (depending on which arrangement described above is used) by taking the graph topology into account. For example, the graph topology allows a consideration of whether operations may be executed in parallel on target hardware or how the performance of one node is affected by its neighbours. This approach is thus likely to outperform the prior art methods. For example, layer-wise predictors assume sequential processing of operations and do not allow for the consideration of parallelism. This may lead to inaccurate measurements compared to the present methods. Direct measurements are typically slow and require significant human effort to develop paired arrangements of neural network models and hardware arrangements. Similarly, a cycle-accurate simulator is typically slow and requires significant human effort.

## Claims

1. A computer-implemented method using a trained predictor (200) for predicting performance of a neural network on a hardware arrangement, the trained predictor comprising a first feature extractor (502) branch and a second feature extractor (504) branch followed by a fully connected layer (506), the first and second feature extractors comprising a respective graph convolution network comprising a plurality of layers, the method comprising:
obtaining (S610) a hardware arrangement comprising a plurality of interconnected components or devices;
obtaining (S600) a neural network model which is to be implemented on the hardware arrangement;
obtaining (S612) a first graphical model for representing hardware arrangements as a plurality of connected nodes, wherein each of the interconnected components or devices is represented by one of the plurality of connected nodes;
obtaining (S602) a second graphical model for representing the neural network model as a plurality of interconnected nodes, each node representing neural network operations;
converting (S604, S614) the first and second graphical models to respective first and second adjacency matrices (A) and respective first and second feature matrices (V⁽⁰⁾), the first and second adjacency matrices indicating which nodes are connected in the respective graphical models, and the first and second feature matrices encapsulating node parameters of the respective graphical models;
extracting, by the first and second feature extractor ( S606, S616), using the respective graph convolutional network with the respective adjacency matrix and a respective initial feature matrix as input, a graphical representation of the respective graphical models, each one of the graphical representation including the respective feature vector representation for each node of the plurality of connected nodes in the graphical model output by the respective graph convolutional network, wherein the respective graph convolutional network comprise weights obtained during the training of the trained predictor;
predicting performance of the neural network model on the hardware arrangement using the extracted graphical representations as an input to the fully connector layer (506) of the trained predictor (200), wherein the fully connected layer (506) maps its input to performance metrics including one or more of accuracy, latency, energy consumption, thermals and memory utilization, wherein the trained predictor is trained with measurements of the one or more performance metrics when running neural networks on hardware arrangements; and
outputting the predicted performance of the neural network model on the hardware arrangement;
wherein the hardware arrangement is a single-chip device comprising a plurality of interconnected hardware components and the node parameters comprise hardware component type and bandwidth associated with each node or the hardware arrangement is a system comprising a plurality of interconnected devices and the node parameters comprise multiple features selected from processor type, device type, clock frequency, memory size and bandwidth associated with each node, and
wherein the node parameters of the second graphical model comprise features defining the neural network operations represented by each node.

2. The method of claim 1, wherein predicting performance of the neural network model on the hardware arrangement comprises at least one of:
predicting individual performances of each interconnected hardware component or interconnected device within the hardware arrangement; and
predicting overall performance of the hardware arrangement.

3. The method as claimed in claim 1, wherein graphical models comprise a global node and predicting the overall performance of the neural network model on the hardware arrangement uses the global node;
wherein the global node connects to all of the plurality of connected nodes in the graphic model and is used to aggregate all node-level information within the graphic model.

4. The method of any one of the preceding claims, wherein extracting a graphical representation of the neural network model comprises:
extracting a feature vector for each node of the plurality of connected nodes in the graphical model, wherein the feature vector comprises features of the operation selected from input, output, a 3x3 convolutional layer, a 1x1 convolutional layer and an averaging operation.

5. The method as claimed in claim 1, wherein predicting performance of the neural network model on the hardware arrangement comprises predicting individual performances of each operation of the neural network model.

6. The method as claimed in any one of claims 1 to 3, further comprising
obtaining a second hardware arrangement comprising a plurality of interconnected components or devices;
extracting, using the second feature extractor (704) of the trained predictor, a graphical representation of the second hardware arrangement;
predicting, using the trained predictor, performance of the neural network model on the second hardware arrangement using the extracted graphical representation of the second hardware arrangement;
comparing the predicted performance of the neural network model on the hardware arrangement and the predicted performance of the neural network model on the second hardware arrangement; and
wherein outputting the predicted performance comprises outputting an indication of the performance of the neural network model on the hardware arrangement relative to the performance of the neural network model on the second hardware arrangement.

7. The method as claimed in any one of claims 1 to 3, wherein the neural network model and the hardware arrangement are a first paired combination, the method further comprising
obtaining a graphical model for representing neural network models, wherein the graphical model comprises a plurality of connected nodes;
extracting, using the first feature extractor (702) of the trained predictor, a graphical representation of the neural network model of the first paired combination, wherein each of the operations is represented by one of the plurality of connected nodes;
obtaining a second paired combination having a second hardware arrangement comprising a plurality of interconnected components or devices and a second neural network model which is to be implemented on the second hardware arrangement;
extracting, using the second feature extractor (704) of the trained predictor, a graphical representation of the second hardware arrangement and a graphical representation of the second neural network model,
predicting, using the trained predictor, performance of the first paired combination using the extracted graphical representation of the hardware arrangement and the extracted graphical representation of the neural network model;
predicting, using the trained predictor, performance of the second paired combination using the extracted graphical representation of the second hardware arrangement and the extracted graphical representation of the second neural network model;
comparing the predicted performance of the first paired combination and the predicted performance of the second paired combination; and
wherein outputting the predicted performance comprises outputting a relative performance of the first paired combination compared to the second paired combination.

8. A computer-implemented method of designing hardware for implementing a neural network model, the method comprising
obtaining a plurality of hardware arrangements;
predicting the performance of the neural network model on each hardware arrangement in the plurality of hardware arrangements using the method of any one of claims 1 to 3;
comparing the predicted performances for each hardware arrangement and
selecting the hardware arrangement having a preferred predicted performance.

9. A computer-implemented method of designing hardware for implementing a neural network model, the method comprising
obtaining a plurality of hardware arrangements;
obtaining a plurality of neural network models;
generating a plurality of paired combinations of neural network models and hardware arrangements, wherein each paired combination comprises a neural network model selected from the plurality of neural network models and a hardware arrangement selected from the plurality of hardware arrangements;
outputting the relative performance of each paired combination using the method of claim 7;
ranking each paired combination based on the output relative performances and
selecting the highest ranked paired combination.

10. The method of claim 9, wherein the trained predictor (200) is trained by:
selecting a group of paired combinations from a search space of paired combinations;
training the predictor (200) using the selected group of paired combinations;
predicting, after training, the relative performance of all paired combinations in the search space;
ranking each paired combination in the search spaced based on the predicted relative performance; and
repeating the selecting, training, predicting and ranking steps;
wherein a first group of paired combinations is selected randomly and subsequent groups of paired combinations are a group of the highest ranked paired combinations.

11. A server comprising:
a trained predictor (200, 500, 700, 900) which is configured to carry out the method of any of claims 1 to 9.

12. A non-transitory data carrier carrying code which, when implemented on a processor, causes the processor to carry out the method of any of claims 1 to 10.

## Patentansprüche

1. Computerimplementiertes Verfahren, verwendend einen trainierten Prädiktor (200) zum Vorhersagen einer Leistung eines neuronalen Netzes auf einer Hardwareanordnung, wobei der trainierte Prädiktor einen ersten Merkmalsextraktor(502)-Zweig und einen zweiten Merkmalsextraktor(504)-Zweig, gefolgt von einer vollständig verbundenen Schicht (506), umfasst, wobei der erste und der zweite Merkmalsextraktor ein jeweiliges Graph-Faltungsnetz umfassen, das eine Vielzahl von Schichten umfasst, wobei das Verfahren Folgendes umfasst:
Erlangen (S610) einer Hardwareanordnung, die eine Vielzahl von miteinander verbundenen Komponenten oder Geräten umfasst;
Erlangen (S600) eines neuronalen Netzmodells, das auf der Hardwareanordnung zu implementieren ist;
Erlangen (S612) eines ersten grafischen Modells zum Darstellen von Hardwareanordnungen als eine Vielzahl von verbundenen Knoten, wobei jede der miteinander verbundenen Komponenten oder Geräte durch einen aus der Vielzahl von verbundenen Knoten dargestellt wird;
Erlangen (S602) eines zweiten grafischen Modells zum Darstellen des neuronalen Netzmodells als eine Vielzahl von miteinander verbundenen Knoten, wobei jeder Knoten neuronale Netzoperationen darstellt;
Umwandeln (S604, S614) des ersten und des zweiten grafischen Modells in eine jeweilige erste und zweite Nachbarschaftsmatrix (A) und eine jeweilige erste und zweite Merkmalsmatrix (V⁽⁰⁾), wobei die erste und die zweite Nachbarschaftsmatrix angeben, welche Knoten in den jeweiligen grafischen Modellen verbunden sind, und die erste und die zweite Merkmalsmatrix Knotenparameter der jeweiligen grafischen Modelle beschreiben;
Extrahieren, durch den ersten und den zweiten Merkmalsextraktor ( S606, S616), unter Verwendung des jeweiligen Graph-Faltungsnetzes mit der jeweiligen Nachbarschaftsmatrix und einer jeweiligen Anfangsmerkmalsmatrix als Eingabe, einer grafischen Darstellung der jeweiligen grafischen Modelle, wobei jede der grafischen Darstellung die jeweilige Merkmalsvektordarstellung für jeden Knoten aus der Vielzahl von verbundenen Knoten in dem grafischen Modell enthält, das durch das jeweilige Graph-Faltungsnetz ausgegeben wird, wobei das jeweilige Graph-Faltungsnetz Gewichte umfasst, die während des Trainings des trainierten Prädiktors erlangt werden;
Vorhersagen einer Leistung des neuronalen Netzmodells auf der Hardwareanordnung unter Verwendung der extrahierten grafischen Darstellungen als eine Eingabe in die vollständig verbindende Schicht (506) des trainierten Prädiktors (200), wobei die vollständig verbundene Schicht (506) ihre Eingabe auf Leistungsmetriken abbildet, einschließlich eines oder mehrerer von Genauigkeit, Latenz, Energieverbrauch, Wärmewerten und Speichernutzung, wobei der trainierte Prädiktor mit Messungen der einen oder mehreren Leistungsmetriken trainiert wird, wenn neuronale Netze auf Hardwareanordnungen ausgeführt werden; und
Ausgeben der vorhergesagten Leistung des neuronalen Netzmodells auf der Hardwareanordnung;
wobei die Hardwareanordnung ein Ein-Chip-Gerät ist, die eine Vielzahl von miteinander verbundenen Hardwarekomponenten umfasst, und die Knotenparameter einen Hardwarekomponententyp und eine jedem Knoten zugeordnete Bandbreite umfassen, oder die Hardwareanordnung ein System ist, das eine Vielzahl von miteinander verbundenen Geräten umfasst, und die Knotenparameter vielfache Merkmale umfassen, die aus einem Prozessortyp, einem Gerätetyp, einer Taktfrequenz, einer Speichergröße und einer Bandbreite, die jedem Knoten zugeordnet sind, ausgewählt sind, und
wobei die Knotenparameter des zweiten grafischen Modells Merkmale umfassen, die die neuronalen Netzoperationen definieren, die durch jeden Knoten dargestellt werden.

2. Verfahren nach Anspruch 1, wobei das Vorhersagen der Leistung des neuronalen Netzmodells auf der Hardwareanordnung mindestens eines von Folgenden umfasst:
Vorhersagen individueller Leistungen jeder miteinander verbundenen Hardwarekomponente oder miteinander verbundenem Gerät innerhalb der Hardwareanordnung; und
Vorhersagen der Gesamtleistung der Hardwareanordnung.

3. Verfahren wie in Anspruch 1 beansprucht, wobei grafische Modelle einen globalen Knoten umfassen und das Vorhersagen der Gesamtleistung des neuronalen Netzmodells auf der Hardwareanordnung den globalen Knoten verwendet;
wobei der globale Knoten mit allen aus der Vielzahl von verbundenen Knoten in dem grafischen Modell verbunden ist und verwendet wird, um alle Informationen auf Knotenebene innerhalb des grafischen Modells zu vereinigen.

4. Verfahren nach einem der vorhergehenden Ansprüche, wobei das Extrahieren einer grafischen Darstellung des neuronalen Netzmodells Folgendes umfasst:
Extrahieren eines Merkmalsvektors für jeden Knoten aus der Vielzahl von verbundenen Knoten in dem grafischen Modell, wobei der Merkmalsvektor Merkmale der Operation umfasst, ausgewählt aus Eingabe, Ausgabe, einer 3x3-Faltungsschicht, einer 1x1-Faltungsschicht und einer Mittelungsoperation.

5. Verfahren wie in Anspruch 1 beansprucht, wobei das Vorhersagen der Leistung des neuronalen Netzmodells auf der Hardwareanordnung Vorhersagen einzelner Leistungen jeder Operation des neuronalen Netzmodells umfasst.

6. Verfahren wie in einem der Ansprüche 1 bis 3 beansprucht, ferner umfassend:
Erlangen einer zweiten Hardwareanordnung, die eine Vielzahl von miteinander verbundenen Komponenten oder Geräten umfasst;
Extrahieren, unter Verwendung des zweiten Merkmalsextraktors (704) des trainierten Prädiktors, einer grafischen Darstellung der zweiten Hardwareanordnung;
Vorhersagen, unter Verwendung des trainierten Prädiktors, der Leistung des neuronalen Netzmodells auf der zweiten Hardwareanordnung unter Verwendung der extrahierten grafischen Darstellung der zweiten Hardwareanordnung;
Vergleichen der vorhergesagten Leistung des neuronalen Netzmodells auf der Hardwareanordnung und der vorhergesagten Leistung des neuronalen Netzmodells auf der zweiten Hardwareanordnung; und
wobei das Ausgeben der vorhergesagten Leistung Ausgeben einer Angabe der Leistung des neuronalen Netzmodells auf der Hardwareanordnung relativ zu der Leistung des neuronalen Netzmodells auf der zweiten Hardwareanordnung umfasst.

7. Verfahren wie in einem der Ansprüche 1 bis 3 beansprucht, wobei das neuronale Netzmodell und die Hardwareanordnung eine erste Paar-Kombination sind, wobei das Verfahren ferner Folgendes umfasst:
Erlangen eines grafischen Modells zum Darstellen von neuronalen Netzmodellen, wobei das grafische Modell eine Vielzahl von verbundenen Knoten umfasst;
Extrahieren, unter Verwendung des ersten Merkmalsextraktors (702) des trainierten Prädiktors, einer grafischen Darstellung des neuronalen Netzmodells der ersten Paar-Kombination, wobei jede der Operationen durch einen aus der Vielzahl von verbundenen Knoten dargestellt wird;
Erlangen einer zweiten Paar-Kombination mit einer zweiten Hardwareanordnung, die eine Vielzahl von miteinander verbundenen Komponenten oder Geräten umfasst, und einem zweiten neuronalen Netzmodell, das auf der zweiten Hardwareanordnung zu implementieren ist;
Extrahieren, unter Verwendung des zweiten Merkmalsextraktors (704) des trainierten Prädiktors, einer grafischen Darstellung der zweiten Hardwareanordnung und einer grafischen Darstellung des zweiten neuronalen Netzmodells,
Vorhersagen, unter Verwendung des trainierten Prädiktors, der Leistung der ersten Paar-Kombination unter Verwendung der extrahierten grafischen Darstellung der Hardwareanordnung und der extrahierten grafischen Darstellung des neuronalen Netzmodells unter Verwendung des trainierten Prädiktors;
Vorhersagen, unter Verwendung des trainierten Prädiktors, der Leistung der zweiten Paar-Kombination unter Verwendung der extrahierten grafischen Darstellung der zweiten Hardwareanordnung und der extrahierten grafischen Darstellung des zweiten neuronalen Netzmodells;
Vergleichen der vorhergesagten Leistung der ersten Paar-Kombination und der vorhergesagten Leistung der zweiten Paar-Kombination; und
wobei das Ausgeben der vorhergesagten Leistung Ausgeben einer relativen Leistung der ersten Paar-Kombination im Vergleich zu der zweiten Paar-Kombination umfasst.

8. Computerimplementiertes Verfahren zum Entwerfen von Hardware zum Implementieren eines neuronalen Netzmodells, wobei das Verfahren Folgendes umfasst:
Erlangen einer Vielzahl von Hardwareanordnungen;
Vorhersagen der Leistung des neuronalen Netzmodells auf jeder Hardwareanordnung in der Vielzahl von Hardwareanordnungen unter Verwendung des Verfahrens nach einem der Ansprüche 1 bis 3;
Vergleichen der vorhergesagten Leistungen für jede Hardwareanordnung und
Auswählen der Hardwareanordnung mit einer bevorzugten vorhergesagten Leistung.

9. Computerimplementiertes Verfahren zum Entwerfen von Hardware zum Implementieren eines neuronalen Netzmodells, wobei das Verfahren Folgendes umfasst:
Erlangen einer Vielzahl von Hardwareanordnungen;
Erlangen einer Vielzahl von neuronalen Netzmodellen;
Erzeugen einer Vielzahl von Paar-Kombinationen von neuronalen Netzmodellen und Hardwareanordnungen, wobei jede Paar-Kombination ein neuronales Netzmodell, das aus der Vielzahl von neuronalen Netzmodellen ausgewählt ist, und eine Hardwareanordnung, die aus der Vielzahl von Hardwareanordnungen ausgewählt ist, umfasst;
Ausgeben der relativen Leistung jeder Paar-Kombination unter Verwendung des Verfahrens nach Anspruch 7;
Klassifizieren jeder Paar-Kombination basierend auf den relativen Ausgabeleistungen und
Auswählen der am höchsten klassifizierten Paar-Kombination.

10. Verfahren nach Anspruch 9, wobei der trainierte Prädiktor (200) durch Folgendes trainiert wird:
Auswählen einer Gruppe von Paar-Kombinationen aus einem Suchraum von Paar-Kombinationen;
Trainieren des Prädiktors (200) unter Verwendung der ausgewählten Gruppe von Paar-Kombinationen;
Vorhersagen der relativen Leistung aller Paar-Kombinationen in dem Suchraum nach dem Trainieren;
Klassifizieren jeder Paar-Kombination in dem Suchraum basierend auf der vorhergesagten relativen Leistung; und
Wiederholen der Schritte des Auswählens, Trainierens, Vorhersagens und Klassifizierens;
wobei eine erste Gruppe von Paar-Kombinationen zufällig ausgewählt wird und nachfolgende Gruppen von Paar-Kombinationen eine Gruppe der am höchsten klassifizierten Paar-Kombinationen sind.

11. Server, umfassend:
einen trainierten Prädiktor (200, 500, 700, 900), der dazu konfiguriert ist, das Verfahren nach einem der Ansprüche 1 bis 9 durchzuführen.

12. Nichtflüchtiger Datenträger, der einen Code trägt, der bei Implementierung auf einem Prozessor bewirkt, dass der Prozessor das Verfahren nach einem der Ansprüche 1 bis 10 durchführt.

## Revendications

1. Procédé mis en œuvre par ordinateur utilisant un prédicteur entraîné (200) pour prédire les performances d'un réseau neuronal sur un agencement matériel, le prédicteur entraîné comprenant une branche de premier extracteur de caractéristiques (502) et une branche de second extracteur de caractéristiques (504) suivies d'une couche entièrement connectée (506), les premier et second extracteurs de caractéristiques comprenant un réseau de convolution de graphes respectif comprenant une pluralité de couches, le procédé comprenant :
l'obtention (S610) d'un agencement matériel comprenant une pluralité de composants ou de dispositifs interconnectés ;
l'obtention (S600) d'un modèle de réseau neuronal qui doit être mis en œuvre sur l'agencement matériel ;
l'obtention (S612) d'un premier modèle graphique pour représenter des agencements matériels sous la forme d'une pluralité de nœuds connectés, chacun des composants ou dispositifs interconnectés étant représenté par l'un de la pluralité de nœuds connectés ;
l'obtention (S602) d'un second modèle graphique pour représenter le modèle de réseau neuronal en tant que pluralité de nœuds interconnectés, chaque nœud représentant des opérations de réseau neuronal ;
la conversion (S604, S614) des premier et second modèles graphiques en des première et seconde matrices d'adjacence respectives (A) et des première et seconde matrices de caractéristiques respectives (V⁽⁰⁾), les première et seconde matrices d'adjacence indiquant quels nœuds sont connectés dans les modèles graphiques respectifs, et les première et seconde matrices de caractéristiques encapsulant les paramètres de nœuds des modèles graphiques respectifs ;
l'extraction, par les premier et second extracteurs de caractéristiques (S606, S616), à l'aide du réseau convolutif de graphes respectif avec la matrice d'adjacence respective et une matrice de caractéristiques initiale respective en entrée, d'une représentation graphique des modèles graphiques respectifs, chacune de la représentation graphique comprenant la représentation de vecteur de caractéristiques respective pour chaque nœud de la pluralité de nœuds connectés dans le modèle graphique émis en sortie par le réseau convolutif de graphes respectif, ledit réseau convolutif de graphes respectif comprenant des poids obtenus durant l'entraînement du prédicteur entraîné ;
la prédiction de performances du modèle de réseau neuronal sur l'agencement matériel utilisant des représentations graphiques extraites en tant qu'entrée de la couche entièrement connectée (506) du prédicteur entraîné (200), ladite couche entièrement connectée (506) mettant en correspondance son entrée avec des métriques de performances comprenant l'une ou plusieurs de la précision, de la latence, de la consommation d'énergie, les thermiques et l'utilisation de la mémoire, ledit prédicteur entraîné étant entraîné avec des mesures de la ou des métriques de performances lors de l'exécution de réseaux neuronaux sur des agencements matériels ; et
l'émission en sortie de la performance prédite du modèle de réseau neuronal sur l'agencement matériel ;
ledit agencement matériel étant un dispositif monopuce comprenant une pluralité de composants matériels interconnectés et lesdits paramètres de nœud comprenant le type de composant matériel et la bande passante associée à chaque nœud ou ledit agencement matériel étant un système comprenant une pluralité de dispositifs interconnectés et lesdits paramètres de nœud comprenant de multiples caractéristiques sélectionnées parmi le type de processeur, le type de dispositif, la fréquence d'horloge, la taille de mémoire et la bande passante associés à chaque nœud, et
lesdits paramètres de nœud du second modèle graphique comprenant des caractéristiques définissant les opérations de réseau neuronal représentées par chaque nœud.

2. Procédé de la revendication 1, ladite prédiction de performance du modèle de réseau neuronal sur l'agencement matériel comprenant au moins un parmi :
la prédiction de performances individuelles de chaque composant matériel interconnecté ou dispositif interconnecté au sein de l'agencement matériel ; et
la prédiction de la performance globale de l'agencement matériel.

3. Procédé selon la revendication 1, lesdits modèles graphiques comprenant un nœud global et la prédiction de la performance globale du modèle de réseau neuronal sur l'agencement matériel utilisant le nœud global ;
ledit nœud global se connectant à l'ensemble de la pluralité de nœuds connectés dans le modèle graphique et étant utilisé pour agréger toutes les informations de niveau nœud dans le modèle graphique.

4. Procédé de l'une quelconque des revendications précédentes, ladite extraction d'une représentation graphique du modèle de réseau neuronal comprenant :
l'extraction d'un vecteur caractéristique pour chaque nœud de la pluralité de nœuds connectés dans le modèle graphique, ledit vecteur caractéristique comprenant des caractéristiques de l'opération sélectionnées parmi l'entrée, la sortie, une couche convolutive 3x3, une couche convolutive 1x1 et une opération de moyennage.

5. Procédé selon la revendication 1, ladite prédiction de performance du modèle de réseau neuronal sur l'agencement matériel comprenant la prédiction de performances individuelles de chaque opération du modèle de réseau neuronal.

6. Procédé selon l'une quelconque des revendications 1 à 3, comprenant en outre :
l'obtention d'un second agencement matériel comprenant une pluralité de composants ou de dispositifs interconnectés ;
l'extraction, à l'aide du second extracteur de caractéristiques (704) du prédicteur entraîné, d'une représentation graphique du second agencement matériel ;
la prédiction, à l'aide du prédicteur entraîné, de la performance du modèle de réseau neuronal sur le second agencement matériel à l'aide de la représentation graphique extraite du second agencement matériel ;
la comparaison de la performance prédite du modèle de réseau neuronal sur l'agencement matériel et de la performance prédite du modèle de réseau neuronal sur le second agencement matériel ; et
ladite émission en sortie de la performance prédite comprenant l'émission en sortie d'une indication de la performance du modèle de réseau neuronal sur l'agencement matériel par rapport à la performance du modèle de réseau neuronal sur le second agencement matériel.

7. Procédé selon l'une quelconque des revendications 1 à 3, ledit modèle de réseau neuronal et ledit agencement matériel étant une première combinaison appariée, le procédé comprenant en outre :
l'obtention d'un modèle graphique pour la représentation des modèles de réseau neuronal, ledit modèle graphique comprenant une pluralité de nœuds connectés ;
l'extraction, à l'aide du premier extracteur de caractéristiques (702) du prédicteur entraîné, d'une représentation graphique du modèle de réseau neuronal de la première combinaison appariée, chacune des opérations étant représentée par l'un de la pluralité de nœuds connectés ;
l'obtention d'une seconde combinaison appariée possédant un second agencement matériel comprenant une pluralité de composants ou de dispositifs interconnectés et un second modèle de réseau neuronal qui doit être mis en œuvre sur le second agencement matériel ;
l'extraction, à l'aide du second extracteur de caractéristiques (704) du prédicteur entraîné, d'une représentation graphique du second agencement matériel et d'une représentation graphique du second modèle de réseau neuronal,
la prédiction, à l'aide du prédicteur entraîné, de la performance de la première combinaison appariée à l'aide de la représentation graphique extraite de l'agencement matériel et de la représentation graphique extraite du modèle de réseau neuronal ;
la prédiction, à l'aide du prédicteur entraîné, de la performance de la seconde combinaison appariée à l'aide de la représentation graphique extraite du second agencement matériel et de la représentation graphique extraite du second modèle de réseau neuronal ;
la comparaison de la performance prédite de la première combinaison appariée et de la performance prédite de la seconde combinaison appariée ; et
ladite émission en sortie de la performance prédite comprenant l'émission en sortie d'une performance relative de la première combinaison appariée comparée à la seconde combinaison appariée.

8. Procédé mis en œuvre par ordinateur de conception de matériel pour mettre en œuvre un modèle de réseau neuronal, le procédé comprenant
l'obtention d'une pluralité d'agencements matériels ;
la prédiction de la performance du modèle de réseau neuronal sur chaque agencement matériel de la pluralité d'agencements matériels en utilisant le procédé de l'une quelconque des revendications 1 à 3 ;
la comparaison des performances prédites pour chaque agencement matériel et
la sélection de l'agencement matériel possédant une performance prédite préférée.

9. Procédé mis en œuvre par ordinateur de conception de matériel pour mettre en œuvre un modèle de réseau neuronal, le procédé comprenant
l'obtention d'une pluralité d'agencements matériels ;
l'obtention d'une pluralité de modèles de réseau neuronal ;
la génération d'une pluralité de combinaisons appariées de modèles de réseau neuronal et d'agencements matériels, chaque combinaison appariée comprenant un modèle de réseau neuronal sélectionné parmi la pluralité de modèles de réseau neuronal et un agencement matériel sélectionné parmi la pluralité d'agencements matériels ;
l'émission en sortie des performances relatives de chaque combinaison appariée à l'aide du procédé de la revendication 7 ;
le classement de chaque combinaison appariée sur la base des performances relatives de sortie et
la sélection de la combinaison appariée la mieux classée.

10. Procédé de la revendication 9, ledit prédicteur entraîné (200) étant entraîné par :
la sélection d'un groupe de combinaisons appariées à partir d'un espace de recherche de combinaisons appariées ;
l'entraînement du prédicteur (200) à l'aide du groupe sélectionné de combinaisons appariées ;
la prédiction, après l'entraînement, des performances relatives de toutes les combinaisons appariées dans l'espace de recherche ;
le classement de chaque combinaison appariée dans la recherche espacée sur la base de la performance relative prédite ; et
la répétition des étapes de sélection, d'entraînement, de prédiction et de classement ;
un premier groupe de combinaisons appariées étant sélectionné de manière aléatoire et les groupes suivants de combinaisons appariées étant un groupe des combinaisons appariées les mieux classées.

11. Serveur comprenant :
un prédicteur entraîné (200, 500, 700, 900) qui est configuré pour effectuer le procédé de l'une quelconque des revendications 1 à 9.

12. Support de données non transitoire portant un code qui, lorsqu'il est mis en œuvre sur un processeur, amène le processeur à effectuer le procédé de l'une quelconque des revendications 1 à 10.
